(19) Europäisches Patentamt
European Patent Office
Office européen des brevets

(11) **EP 4 439 137 A1**

(12) **EUROPÄISCHE PATENTANMELDUNG**

(43) Veröffentlichungstag:
**02.10.2024  Patentblatt 2024/40**

(51) Internationale Patentklassifikation (IPC):
***G02B 6/02*** *(2006.01)*

(21) Anmeldenummer: **23164685.2**

(52) Gemeinsame Patentklassifikation (CPC):
**G02B 6/02328; G02B 6/02338; G02B 6/02366;**
C03B 2203/16; C03B 2203/42

(22) Anmeldetag: **28.03.2023**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Heraeus Quarzglas GmbH & Co. KG
63450 Hanau (DE)**

(72) Erfinder:
• **Dr. Tiess, Tobias
06803 Bitterfeld-Wolfen (DE)**
• **Dr. Rosenberger, Manuel
63801 Kleinostheim (DE)**

(54) **ANTIRESONANTE HOHLKERNFASER**

(57)     Die Erfindung betrifft eine antiresonante Hohlkernfaser (1000), umfassend eine Faser-Längsachse (2300) und einen Faserkernradius R_Faser (2310), einen Fasermantel (2000), welcher eine Mantel-Innenbohrung (2200) aufweist, eine Anzahl von Antiresonanzeinheiten (3000),
• jeweils umfassend eine ARE-Außeneinheit (3100) und eine ARE-Inneneinheit (3400),
• wobei die kreisbogenartig ausgestaltete ARE-Außeneinheit (3100) und die kreisbogenartig ausgestaltete ARE-Inneneinheit (3400) entlang zweier Nahtlinien (3700, 3700') derart miteinander verbunden sind, dass die ARE-Inneneinheit (3400) zumindest partiell hineinragt in einen ersten Innenraum (3170) der ARE-Außeneinheit (3100),
wobei die Antiresonanzeinheiten (3000) zueinander beabstandet und zueinander kontaktfrei an Soll-Positionen an einer Mantel-Innenseite (2150) angeordnet sind, wobei in wenigstens einer Antiresonanzeinheit (3000)
• eine ARE-Bogeneinheit (3900) in dem ersten Innenraum (3170) angeordnet ist,
• die ARE-Bogeneinheit (3900) kreisförmig ausgestaltet ist,
• einen Radius FB_R (3920) aufweist, und
• die ARE-Bogeneinheit (3900) mit der ARE-Inneneinheit (3400) entlang einer Berührungsnaht (3730) verbunden ist.

Erfindungsgemäß ist vorgesehen, dass für das Verhältnis des zweifachen Radius der ARE-Bogeneinheit FB_R (3920) zum Faserkernradius R_Faser (2310) gilt

$$\frac{2 * FB\_R}{R\_Faser} = [0{,}7; 1{,}7]$$

Figur 6

**Beschreibung**

Hintergrund der Erfindung

Die Erfindung betrifft eine antiresonante Hohlkernfaser.

Stand der Technik

Hohlkernfasern weisen einen Kern auf, der einen evakuierten, mit Gas oder Flüssigkeit gefüllten Hohlraum umfasst. In Hohlkernfasern ist die Wechselwirkung des Lichts mit dem Glas geringer als in Vollkernfasern. Der Brechungsindex des Kerns ist kleiner als der des umgebenden Mantels, so dass eine Lichtleitung durch Totalreflexion nicht möglich ist. In Abhängigkeit vom physikalischen Mechanismus der Lichtleitung werden Hohlkernfasern unterteilt in "photonische Bandlückenfasern" und "Antiresonanz-Reflexionsfasern".

Bei der als "antiresonante Hohlkernfaser" (auch "antiresonant hollow-core fiber" oder "ARHCF") bezeichneten Ausführungsvariante der Hohlkernfaser ist der hohle Kernbereich von einem inneren Mantelbereich umgeben, in dem sogenannte Antiresonanzeinheiten (auch "antiresonante Elemente" oder "AREs") angeordnet sind. Die um den Hohlkern gleichmäßig verteilten Wandungen der Antiresonanzeinheiten können als in Antiresonanz betriebene Fabry-Perot-Kavitäten wirken, die das auftreffende Licht reflektieren und dadurch Wellenleitung im Faserkern ermöglichen.

Diese Technologie verspricht eine Hohlkernfaser mit niedriger optischer Dämpfung, einem sehr breiten Transmissionsspektrum (auch im UV- oder IR-Wellenlängenbereich) und einer geringen Latenz bei der Datenübertragung.

Aus der WO 2022157179 A1 ist eine antiresonante Hohlkernfaser bekannt, bei der der Hohlkern von einem inneren Mantel mit Antiresonanzeinheiten umgeben ist. Diese Antiresonanzeinheiten weisen ein ARE-Außenelement und ein darin eingesetztes ARE-Innenelement auf. Weiterhin können in den nicht-resonanten Elementen kreisförmige Bogenelemente angeordnet sein. Es hat sich aber als nachteilig herausgestellt, dass je nach Auslegung der Bogenelemente die Übertragungseigenschaften von Grundmode und Moden höherer Ordnung ungeeignet für Anwendungen, speziell im Telekommunikationsbereich sind. In dieser Hinsicht wird Bezug genommen auf die Anmeldung WO 2022157179 A1, deren Inhalt hiermit in diese Anmeldung aufgenommen wird.

Technische Aufgabenstellung

Für die industrielle Nutzung bedarf es antiresonanter Hohlkernfasern, die eine geringe Dämpfung aufweisen. Weiterhin bedarf es einer antiresonanten Hohlkernfaser, die einfach und in großem Umfang herstellbar ist. Nur so lassen sich die Kosten für die antiresonanten Hohlkernfasern in einen sinnhaften Rahmen bringen. Dabei gilt, dass antiresonante Hohlkernfasern, die im Labormaßstab gute Ergebnisse bringen, nicht zwangsläufig auch für den großflächigen Einsatz nutzbar sind.

Ein Ziel der Erfindung ist es, eine antiresonante Hohlkernfaser bereitzustellen, welche die oben genannten Nachteile überwindet.

Ein Ziel der Erfindung ist es, eine antiresonante Hohlkernfaser bereitzustellen, welche exakt und reproduzierbar herstellbar ist und zusätzlich eine geringe Dämpfung aufweist.

Insbesondere ist es ein Ziel der Erfindung, eine antiresonante Hohlkernfaser bereitzustellen, die besonders niedrige Wellenleitungsverluste aufweist.

Insbesondere ist es ein Ziel der Erfindung, eine antiresonante Hohlkernfaser bereitzustellen, die Moden mit höherer Ordnung effizient dämpft.

Bevorzugte Ausführungsvarianten der Erfindung

Ein Beitrag zur mindestens teilweisen Erfüllung mindestens einer der zuvor genannten Aufgaben wird durch die Merkmale der unabhängigen Ansprüche geleistet. Die abhängigen Ansprüche stellen bevorzugte Ausführungsvarianten bereit, die zur mindestens teilweisen Erfüllung mindestens einer der Aufgaben beitragen.

Folgende Ausführungsvarianten tragen mindestens teilweise zur Erfüllung mindestens einer der zuvor genannten Aufgaben bei:

I1.I Eine erste Ausführungsvariante einer antiresonanten Hohlkernfaser, umfassend eine Faser-Längsachse und einen Faserkernradius R_Faser, einen Fasermantel, welcher eine Mantel-Innenbohrung aufweist, eine Anzahl von Antiresonanzeinheiten,

- jeweils umfassend eine ARE-Außeneinheit und eine ARE-Inneneinheit,
- wobei die kreisbogenartig ausgestaltete ARE-Außeneinheit und die kreisbogenartig ausgestaltete ARE-Inneneinheit entlang zweier Nahtlinien derart miteinander verbunden sind, dass die ARE-Inneneinheit zumindest partiell hineinragt in einen ersten Innenraum der ARE-Außeneinheit,

wobei die Antiresonanzeinheiten zueinander beabstandet und zueinander kontaktfrei an Soll-Positionen an einer Mantel-Innenseite angeordnet sind, wobei

- die ARE-Außeneinheit einen ersten Kreisradius FA_R und einen ersten Mittelpunktswinkel FA_MW aufweist,
- die ARE-Inneneinheit einen zweiten Kreisradius FI_R und einen zweiten Mittelpunktswinkel FI_MW aufweist,

wobei ein Betrag einer Abweichung des ersten Kreisradius FA_R vom zweiten Kreisradius FI_R kleiner als 10 % des ersten Kreisradius FA_R ist,
wobei

- der erste Mittelpunktswinkel FA_MW kleiner 345° und größer 275° ist, und
- der zweite Mittelpunktswinkel FI_MW kleiner 195° und größer 40° ist,

wobei in wenigstens einer Antiresonanzeinheit

- ein ARE-Bogeneinheit in dem ersten Innenraum angeordnet ist,
- die ARE-Bogeneinheit kreisförmig ausgestaltet ist,
- einen Radius FB_R aufweist, und
- die ARE-Bogeneinheit mit der ARE-Inneneinheit entlang einer Berührungsnaht verbunden ist.

Diese Ausführungsvariante zeichnet sich dadurch aus, dass für das Verhältnis des zweifachen Radius der ARE-Bogeneinheit FB_R zum Faserkernradius R_Faser gilt

$$\frac{2 * FB\_R}{R\_Faser} = [0,7; 1,7]$$

12.1 Eine weitere Ausführungsvariante einer antiresonanten Hohlkernfaser, umfassend die Merkmale der ersten Ausführungsvariante, zeichnet sich dadurch aus, dass für das Verhältnis des zweifachen Radius der ARE-Bogeneinheit FB_R zum Faserkernradius R_Faser gilt:

- 2*FB_R / R_Faser größer oder gleich 0,8, insbesondere größer oder gleich 0,9, insbesondere größer oder gleich 1,0; und
- 2*FB_R / R_Faser kleiner oder gleich 1,6, insbesondere kleiner oder gleich 1,5, insbesondere kleiner oder gleich 1,45.

I3.I Eine weitere Ausführungsvariante einer antiresonanten Hohlkernfaser, umfassend die Merkmale der ersten oder zweiten Ausführungsvariante, zeichnet sich dadurch aus, dass die Antiresonanzeinheit eine Faserraumhöhe FH_Z1 aufweist, und für das Verhältnis Faserraumhöhe FH_Z1 zum Faserkernradius R_Faser gilt:

$$\frac{FH\_Z1}{R\_Faser} = [0,8; 1,4]$$

I4.I Eine weitere Ausführungsvariante einer antiresonanten Hohlkernfaser, umfassend die Merkmale der dritten Ausführungsvariante, zeichnet sich dadurch aus, dass für das Verhältnis Faserraumhöhe FH_Z1 zum Faserkernradius R_Faser gilt:

- FH_Z1 / R_Faser größer oder gleich 0,8, insbesondere größer oder gleich 0,85, insbesondere größer oder gleich 0,9, insbesondere größer oder gleich 0,95, insbesondere größer oder gleich 1,0 und
- FH_Z1 / R_Faser kleiner oder gleich 1,4, insbesondere kleiner oder gleich 1,35, insbesondere kleiner oder gleich 1,3, insbesondere kleiner oder gleich 1,2.

I5.I Eine weitere Ausführungsvariante einer antiresonanten Hohlkernfaser, umfassend die Merkmale einer der vorherigen Ausführungsvarianten, zeichnet sich dadurch aus, dass für das Verhältnis Faserraumhöhe FH_Z1 zum zweifachen Radius der ARE-Bogeneinheit FB_R gilt:

$$\frac{FH\_Z1}{2 * FB\_R} \leq 2,5 \text{ , insbesondere } \leq 1,3$$

I6.I Eine weitere Ausführungsvariante einer antiresonanten Hohlkernfaser, umfassend die Merkmale der fünften Ausführungsvariante, zeichnet sich dadurch aus, dass für das Verhältnis Faserraumhöhe FH_Z1 zum zweifachen Radius der ARE-Bogeneinheit FB_R gilt:

- FH_Z1 / (2 * FB_R) kleiner oder gleich 1,2, insbesondere kleiner oder gleich 1,05, insbesondere kleiner oder gleich 1,0, insbesondere kleiner oder gleich 0,9, insbesondere kleiner oder gleich 0,85, insbesondere kleiner oder gleich 0,8; und
- FH_Z1 / (2 * FB_R) größer oder gleich 0,1, insbesondere größer oder gleich 0,125, insbesondere größer oder gleich 0,15, insbesondere größer oder gleich 0,2, insbesondere größer oder gleich 0,4, insbesondere größer oder gleich 0,5.

I7.I Eine weitere Ausführungsvariante einer antiresonanten Hohlkernfaser, umfassend eine der vorherigen Ausführungsvarianten, zeichnet sich dadurch aus, dass jede Antiresonanzeinheit ein ARE-Bogeneinheit aufweist, angeordnet in dem jeweils ersten Innenraum der ARE-Außeneinheit.

I8.I Eine weitere Ausführungsvariante einer antiresonanten Hohlkernfaser, umfassend die Merkmale einer der vorherigen Ausführungsvarianten, zeichnet sich dadurch aus, dass der Betrag der Abweichung des ersten Kreisradius FA_R vom zweiten Kreisradius FI_R kleiner als 5 % des ersten Kreisradius FA_R ist, insbesondere kleiner als 3 %, insbesondere kleiner als 2 %, insbesondere kleiner 1 % ist.

I9.I Eine weitere Ausführungsvariante einer antiresonanten Hohlkernfaser, umfassend die Merkmale einer der vorherigen Ausführungsvarianten, zeichnet sich dadurch aus, dass die antiresonante Hohlkernfaser drei, vier, fünf, sechs, sieben oder acht Antiresonanzeinheiten aufweist, insbesondere, dass die antiresonante Hohlkernfaser eine ungerade Anzahl an Antiresonanzeinheiten aufweist.

I10.I Eine weitere Ausführungsvariante einer antiresonanten Hohlkernfaser, umfassend die Merkmale einer der vorherigen Ausführungsvarianten, ist dadurch gekennzeichnet, dass die Antiresonanzeinheiten asymmetrisch an der Innenfläche des Mantels angeordnet sind.

I11.I Eine weitere Ausführungsvariante einer antiresonanten Hohlkernfaser, umfassend die Merkmale einer der vorherigen Ausführungsvarianten, zeichnet sich dadurch aus, dass wenigstens eine der Antiresonanzeinheiten wenigstens eines der folgenden Merkmale aufweist:

- die ARE-Außeneinheit und/oder die ARE-Inneneinheit und/oder die ARE-Bogeneinheit umfasst einen amorphen Festkörper, insbesondere ein Glas, insbesondere Quarzglas,
- die ARE-Außeneinheit und/oder die ARE-Inneneinheit und/oder die ARE-Bogeneinheit besteht aus einem amorphen Festkörper, insbesondere einem Glas, insbesondere Quarzglas,
- die ARE-Außeneinheit und/oder die ARE-Inneneinheit und/oder die ARE-Bogeneinheit sind materialeinheitlich, umfassen insbesondere ein Glas mit einem Brechungsindex von mindestens 1,4, insbesondere 1,4 bis 3, insbesondere 1,4 bis 2,8 oder bestehen daraus, und
- eine Wandstärke der ARE-Außeneinheit und der ARE-Inneneinheit und der ARE-Bogeneinheit sind im Wesentlichen gleich.

I12.I Eine weitere Ausführungsvariante einer antiresonanten Hohlkernfaser, umfassend die Merkmale einer der vorherigen Ausführungsvarianten, zeichnet sich dadurch aus, dass die Wellenleiterverluste der antiresonanten Hohlkernfaser um mindestens einen Faktor 50 kleiner sind als bei einer antiresonanten Hohlkernfaser ohne Bogeneinheit, bei ansonsten gleichen Designparametern.

113.1 Eine weitere Ausführungsvariante einer antiresonanten Hohlkernfaser, umfassend die Merkmale einer der vorherigen Ausführungsvarianten, zeichnet sich dadurch aus, dass die antiresonante Hohlkernfaser wenigstens eines der folgenden Merkmale aufweist:

- eine fundamentale Dämpfung von weniger als 1,0 dB/km, insbesondere von weniger als 0,5 dB/km, insbesondere von weniger als 0,25 dB/km, insbesondere weniger als 0,15 dB/km bei einer transportierten Wellenlänge von zwischen 1,0 $\mu$m und 2,5 $\mu$m, und
- eine fundamentale Dämpfung von weniger als 1 dB/km bei einer transportierten Wellenlänge von bis zu 0,8 $\mu$m.

I14.I Eine weitere Ausführungsvariante einer antiresonanten Hohlkernfaser, umfassend die Merkmale einer der vorherigen Ausführungsvarianten, zeichnet sich dadurch aus, dass ein Unterschied in einer fundamentalen Dämpfung zwischen einer geraden und einer auf einen Durchmesser von 10 mm aufgespulten antiresonanten Hohlkernfaser kleiner ist als zwei Größenordnungen, insbesondere kleiner als eine Größenordnung, insbesondere kleiner als die Hälfte einer Größenordnung.

I15.I Eine weitere Ausführungsvariante einer antiresonanten Hohlkernfaser, umfassend die Merkmale einer der vorherigen Ausführungsvarianten, zeichnet sich dadurch aus, dass für den ersten Kreisradius FA_R und/oder zweiten Kreisradius FI_R gilt:

- kleiner als 30 $\mu$m, insbesondere kleiner als 20 $\mu$m, insbesondere kleiner als 17,5 $\mu$m, insbesondere kleiner oder gleich 16,5 $\mu$m, insbesondere kleiner oder gleich 15,75 $\mu$m, und/oder
- größer als 5 $\mu$m, insbesondere größer als 10 $\mu$m, insbesondere größer oder gleich 11,5 $\mu$m, insbesondere größer oder gleich 12,25 $\mu$m.

I16.I Eine weitere Ausführungsvariante einer antiresonanten Hohlkernfaser, umfassend die Merkmale einer der vorherigen Ausführungsvarianten, zeichnet sich dadurch aus, dass mindestens eine ARE-Bogeneinheit wenigstens eines der folgenden Merkmale aufweist:

- Radius der ARE-Bogeneinheit FB_R ist kleiner 15 $\mu$m, insbesondere kleiner 12,5 $\mu$m, insbesondere kleiner 11 $\mu$m, insbesondere keiner 9,5 $\mu$m
- Radius der ARE-Bogeneinheit FB_R ist größer 0,75 $\mu$m, insbesondere größer 1 $\mu$m, insbesondere größer 2,5$\mu$m.

I17.I Eine weitere Ausführungsvariante einer antiresonanten Hohlkernfaser, umfassend die Merkmale einer der vorherigen Ausführungsvarianten, zeichnet sich dadurch aus, dass mindestens eine ARE-Außeneinheit wenigstens eines der folgenden Merkmale aufweist:

- der erste Kreisradius FA_R ist kleiner 25 $\mu$m, insbesondere kleiner 15 $\mu$m,
- der erste Kreisradius FA_R ist größer 5 $\mu$m, insbesondere größer 7 $\mu$m,
- der erste Kreisradius FA_R ist kleiner oder gleich 16,5 $\mu$m, insbesondere kleiner oder gleich 15,75 $\mu$m,
- der erste Kreisradius FA_R ist größer oder gleich 11,5 $\mu$m, insbesondere größer oder gleich 12,25 $\mu$m,
- der erste Mittelpunktswinkel FA_MW ist kleiner 345°, insbesondere kleiner 340°; insbesondere kleiner 320°, insbesondere kleiner 310°
- der erste Mittelpunktswinkel FA_MW ist größer 220°, insbesondere größer 250°, insbesondere größer 270°, insbesondere größer 280°.

I18.I Eine weitere Ausführungsvariante einer antiresonanten Hohlkernfaser, umfassend die Merkmale einer der vorherigen Ausführungsvarianten, zeichnet sich dadurch aus, dass mindestens eine ARE-Inneneinheit wenigstens eines der folgenden Merkmale aufweist:

- der zweite Kreisradius FI_R ist kleiner 25 $\mu$m, insbesondere kleiner 15 $\mu$m,
- der zweite Kreisradius FI_R ist größer 5 $\mu$m, insbesondere größer 7 $\mu$m,
- der zweite Kreisradius FI_R ist kleiner oder gleich 16,5 $\mu$m, insbesondere kleiner oder gleich 15,75 $\mu$m;
- der zweite Kreisradius FI_R ist größer oder gleich 11,5 $\mu$m, insbesondere größer oder gleich 12,25 $\mu$m,
- der zweite Mittelpunktswinkel FI_MW ist kleiner 130°, insbesondere kleiner 120°, insbesondere kleiner 100°; und
- der zweite Mittelpunktswinkel FI_MW ist größer 40°, insbesondere größer 50°.

I19.I Eine weitere Ausführungsvariante einer antiresonanten Hohlkernfaser, umfassend die Merkmale einer der vorherigen Ausführungsvarianten, zeichnet sich dadurch aus, dass wenigstens eine Antiresonanzeinheit wenigstens eines der folgenden Merkmale aufweist:

- eine Wandstärke der ARE-Außeneinheit und/oder der ARE-Inneneinheit und/oder der ARE-Bogeneinheit be-

trägt zwischen 0,1 $\mu$m und 2,5 $\mu$m, insbesondere zwischen 0,15 $\mu$m und 1,5 $\mu$m, insbesondere zwischen 0,25 $\mu$m und 0,75 $\mu$m, insbesondere zwischen 0,35 $\mu$m und 0,65 $\mu$m, insbesondere 0,5 $\mu$m,

- eine Wandstärke der ARE-Außeneinheit und/oder der ARE-Inneneinheit und/oder der ARE-Bogeneinheit beträgt bei einer Signalwellenlänge von 1550 nm im ersten Transmissionsfenster zwischen 0,35 $\mu$m und 0,65 $\mu$m, insbesondere zwischen 0,4 $\mu$m und 0,6 $\mu$m, insbesondere 0,5 $\mu$m,
- eine Wandstärke der ARE-Außeneinheit und/oder der ARE-Inneneinheit und/oder der ARE-Bogeneinheit beträgt bei einer Signalwellenlänge von 1550 nm im zweiten Transmissionsfenster zwischen 0,75 $\mu$m und 1,25 $\mu$m, insbesondere zwischen 0,9 $\mu$m und 1,1 $\mu$m, insbesondere 1 $\mu$m.

Ausführliche Beschreibung

Einige der beschriebenen Merkmale sind mit dem Begriff "im Wesentlichen" verknüpft. Der Begriff "im Wesentlichen" ist so zu verstehen, dass unter realen Bedingungen und Fertigungstechniken eine mathematisch exakte Auslegung von Begrifflichkeiten wie "Überlagerung", "senkrecht", "Durchmesser" oder "Parallelität" nie exakt, sondern nur innerhalb gewisser fertigungstechnischer Fehlertoleranzen gegeben sein kann. Beispielsweise schließen "im Wesentlichen parallele Achsen" einen Winkel von -5 Grad bis 5 Grad zueinander ein und "im Wesentlichen gleiche Volumen" umfassen eine Abweichung von bis zu 5 Volumen-%. Eine "im Wesentlichen aus Quarzglas bestehende Vorrichtung" umfasst beispielsweise einen Quarzglasanteil von ≥95 bis ≤100 Gewichts-%. Weiterhin schließt "im Wesentlichen rechtwinklig" einen Winkel von 85 Grad bis 95 Grad ein. Eine weitere Konkretisierung des Begriffs "im Wesentlichen" erfolgt für einige Merkmale weiter unten.

Die oben genannten Aufgaben werden zumindest teilweise gelöst durch eine antiresonante Hohlkernfaser, umfassend eine Faser-Längsachse und einen Faserkernradius R_Faser, einen Fasermantel, welcher eine Mantel-Innenbohrung aufweist, eine Anzahl von Antiresonanzeinheiten,

- jeweils umfassend eine ARE-Außeneinheit und eine ARE-Inneneinheit,
- wobei die kreisbogenartig ausgestaltete ARE-Außeneinheit und die kreisbogenartig ausgestaltete ARE-Inneneinheit entlang zweier Nahtlinien derart miteinander verbunden sind, dass die ARE-Inneneinheit zumindest partiell hineinragt in einen ersten Innenraum der ARE-Außeneinheit,

wobei die Antiresonanzeinheiten zueinander beabstandet und zueinander kontaktfrei an Soll-Positionen an einer Mantel-Innenseite angeordnet sind, wobei

- die ARE-Außeneinheit einen ersten Kreisradius FA_R und einen ersten Mittelpunktswinkel FA_MW aufweist,
- die ARE-Inneneinheit einen zweiten Kreisradius FI_R und einen zweiten Mittelpunktswinkel FI_MW aufweist,

wobei ein Betrag einer Abweichung des ersten Kreisradius FA_R vom zweiten Kreisradius FI_R kleiner als 10 % des ersten Kreisradius FA_R ist, wobei

- der erste Mittelpunktswinkel FA_MW kleiner 345° und größer 275° ist, und
- der zweite Mittelpunktswinkel FI_MW kleiner 195° und größer 40° ist,

wobei in wenigstens einer Antiresonanzeinheit

- ein ARE-Bogeneinheit in dem ersten Innenraum angeordnet ist,
- die ARE-Bogeneinheit kreisförmig ausgestaltet ist,
- einen Radius FB_R aufweist, und
- die ARE-Bogeneinheit mit der ARE-Inneneinheit entlang einer Berührungsnaht verbunden ist.

Erfindungsgemäß ist vorgesehen, dass für das Verhältnis des zweifachen Radius der ARE-Bogeneinheit FB_R zum Faserkernradius R_Faser gilt:

$$\frac{2 * \text{FB\_R}}{\text{R\_Faser}} = [0{,}7; 1{,}7]$$

Der zweifache Radius der ARE-Bogeneinheit FB_R entspricht einem Durchmesser der ARE-Bogeneinheit. Diese Art der antiresonanten Hohlkernfaser weist eine über kürzere Laufstrecken eine verbesserte Grundmodigkeit auf, da die Moden höherer Ordnung im Kern besonders effizient mit den stark verlustbehafteten Moden in der ARE-Bogeneinheit koppeln.

Als Grundmodigkeit wird dabei verstanden, dass die Grundmode mehr als 95 %, insbesondere mehr als 97,7 % der im Faserkern transportierten Leistung aufweist. Insofern ist ein schnelles Erreichen der Grundmodigkeit gleichbedeutend damit, dass die im Faserkern laufenden Moden höherer Ordnung auf einer kurzen Laufstrecke , insbesondere auf einer Laufstrecke kleiner als 20 m, insbesondere kleiner 10 m, insbesondere kleiner 5 m, so stark gedämpft werden, dass mehr als 95 %, insbesondere mehr als 97,7 % der im Faserkern transportierten Leistung in der Grundmode vorliegen.

Im Allgemeinen weisen antiresonante Hohlkernfaser (im folgenden auch ARHCF) eine Siliziumdioxidhülle und eine mit Luft gefüllte Mantel-Innenbohrung (auch Luftkern) auf, was zu einem speziellen Lichtausbreitungsmechanismus führt. Dabei folgen ARHCF den Lichtleitmechanismen des antiresonant reflektierenden Lichtwellenleiters (Antiresonant Reflecting Optical Waveguiding - ARROW) und nicht dem Prinzip der internen Totalreflexion von Single Mode Fasern (SMF).

Der Lichtausbreitungsmechanismus ARROW nutzt kohärente Reflexionen an den Luft-Siliziumdioxid-Grenzflächen, häufig in Kombination mit einer Anordnung von Antiresonanzeinheiten um einen zentralen Hohlkern, um das sich vorwärts ausbreitende Licht effektiv in dem zentralen Hohlkern einzuschließen und zu leiten. Um bei Simulationen die Lichtausbreitung in den ARHCF wiederzugeben, wird die Hohlkernkapillare mit regelmäßigem Siliziumdioxidmantel als Repräsentant zur Beschreibung der Antiresonanztheorie ausgewählt. Die Hohlkernkapillare mit regelmäßiger Ringummantelung kann als Fabry-Perot-Resonanzraum in radialer Richtung betrachtet werden. Dieser Fabry-Perot-Resonanzraum ermöglicht die Übertragung der optischen Frequenzen im Faserkern, die nicht in Resonanz mit der Kernwand sind. Diese optischen Frequenzen werden zum Faserkern zurückreflektiert, wo sie sich mit geringem Verlust ausbreiten. Andererseits können die optischen Resonanzfrequenzen nicht im Faserkern eingeschlossen werden und entweichen radial in den Mantelbereich.

Der Verlust von ARHCF setzt sich hauptsächlich aus Streuverlusten und Wellenleitungsverlusten zusammen:

- Die Streuverluste teilen sich hauptsächlich auf in Materialstreuverluste in allen Elementen sowie in Oberflächenstreuverluste.

    ◦ Die Oberflächenstreuverluste werden unter anderem durch die Oberflächenrauigkeiten der Mantel-Innenbohrung sowie der ARE-Außeneinheiten verursacht. Diese Oberflächenrauigkeiten werden durch den thermodynamischen Prozess während der Faserherstellung maßgeblich beeinflusst.
    ◦ Die Materialverluste treten in jedem Bereich der ARHCF auf. Das umfasst nicht nur den Hohlkern sondern auch die Glasbereich. Weiterhin kann das Coating, welches den Siliziumdioxidmantel umgibt, einen Beitrag liefern.
    ◦ Die Streuverluste sind im Wesentlichen unabhängig vom gewählten Design der ARHCF.

- Die Wellenleitungsverluste ergeben sich aus - unter anderem - der Anordnung der Antiresonanzeinheiten um einen zentralen Hohlkern.

Die Transmissionsbereiche der ARHCF sind durch die Antiresonanzregionen des unregelmäßigen Mantels spektral vorgegeben. Für das Lichtleitprinzip von ARHCF ist eine Kombination aus Antiresonanz und Unterdrückung der Kopplung der Kernmoden mit den Hüllmoden entscheidend.

Die Kopplung der unterschiedlichen Moden miteinander beeinflusst die Nutzung der ARHCF in z.B. Datencentern wesentlich. Für die nachfolgende Beschreibung und/oder Simulation wurden folgende Moden betrachtet:

- Grundmode im Kern

    - auch als Kerngrundmoden bezeichnet;

- Moden höherer Ordnung im Kern

    - auch als Kernmoden höherer Ordnung (HOM) bezeichnet,
    - wobei in den Simulationen nur die Moden zweiter Ordnung (also die Moden erster Ordnung über der Grundmode) betrachtet wurden;

- Moden in der ARE-Außeneinheit

    - auch als Antiresonanzeinheitsmoden oder ARE-Moden bezeichnet,
    - wobei in den Simulationen nur die Grundmode in den ARE-Außeneinheiten betrachtet wurde;

- Moden in der ARE-Bogeneinheit

  - auch als Bogeneinheitsmoden oder DNE-Moden bezeichnet
  - wobei in den Simulationen nur die Grundmode in den ARE-Bogeneinheiten betrachtet wurden.

Überraschend wurde festgestellt, dass die Geometrie der ARE-Bogeneinheit einen wesentlichen Einfluss auf das Leitungsverhalten einer ARHCF haben kann. Mit der beschriebenen Dimensionierung der ARE-Bogeneinheit lässt sich eine Phasenanpassung der Moden höherer Ordnung im Kern mit jenen in den ARE-Bogeneinheit erreichen. Dieser Effekt ist erwünscht und führt dazu, dass Moden höherer Ordnung im Kern mit den verlustbehafteteren Bogeneinheitsmoden koppeln. Der so entstehende Verlustmechanismus dämpft die Moden höherer Ordnung im Kern zusätzlich zu den inhärenten Wellenleiterverlusten, so dass die ARHCF effektiv in der Kerngrundmode betrieben werden kann.

Sowohl die ARE-Außeneinheit als auch die ARE-Inneneinheit sind kreisbogenartig ausgestaltete. Abweichungen der ARE-Außeneinheitswandung und/oder ARE-Inneneinheitswandung von der idealen Kreisbogenform basieren insbesondere auf fertigungsbedingten Schwankungen. Insbesondere kann der erster Kreisradius FA_R und/oder der zweiter Kreisradius FI_R nicht mehr als 10 %, insbesondere nicht mehr als 5 %, insbesondere nicht mehr als 2,5 % vom mittleren ersten Kreisradius FA_R und/oder mittleren zweiten Kreisradius FI_R abweichen, insbesondere sowohl azimutal über einen Kreisbogen - so dass ein elliptischer Verlauf entsteht - als auch an axial unterschiedlichen Stellen der ARHCF.

Die ARE-Bogeneinheit ist kreisförmig ausgestaltet. Abweichungen des Radius FB_R der ARE-Bogeneinheit von der idealen Kreisform basieren insbesondere auf fertigungsbedingten Schwankungen. Insbesondere kann der Radius FB_R der ARE-Bogeneinheit nicht mehr als 10 %, insbesondere nicht mehr als 5 %, insbesondere nicht mehr als 2,5 % vom mittleren Radius FB_R der ARE-Bogeneinheit abweichen, insbesondere sowohl azimutal über einen Kreis - so dass ein elliptischer Verlauf entsteht - als auch an axial unterschiedlichen Stellen der ARHCF.

Eine weitere Ausführungsvariante ist dadurch gekennzeichnet, dass der Faserkernradius R_Faser kleiner als 30 μm, insbesondere kleiner als 25 μm und insbesondere kleiner als 20 μm ist. Eine weitere Ausführungsvariante ist dadurch gekennzeichnet, dass der Faserkernradiusgrößer als 5 μm, insbesondere größer als 10 μm, insbesondere größer als 15 μm ist. Insbesondere kann die antiresonante Hohlkernfaser einen Faserkernradius R_Faser von 17,25 μm aufweisen. Die aufgeführten Faserkernradien R_Faser stellen insofern eine vorteilhafte Ausführungsvariante da, als

- mit steigendem ersten Kreisradius FA_R die Wellenleiterverluste der Grundmode im Kern sinkt, aber
- mit steigendem ersten Kreisradius FA_R die Biegeempfindlichkeit der ARHCF stark zunimmt.

Dementsprechend resultiert aus den aufgeführten Faserkernradien R_Faser eine ARHCF, die sowohl geringe Wellenleiterverluste der Grundmode als auch eine gute Biegeempfindlichkeit aufweist.

Eine weitere Ausführungsvariante ist dadurch gekennzeichnet, dass für das Verhältnis des zweifachen Radius der ARE-Bogeneinheit FB_R zum Faserkernradius R_Faser gilt:

- 2*FB_R / R_Faser größer oder gleich 0,8, insbesondere größer oder gleich 0,9, insbesondere größer oder gleich 1,0; und
- 2*FB_R / R_Faser kleiner oder gleich 1,6, insbesondere kleiner oder gleich 1,5, insbesondere kleiner oder gleich 1,45.

Diese Art der antiresonanten Hohlkernfaser weist eine besonders kurze Laufstrecke bis zum Erreichen der Grundmodigkeit auf.

Eine weitere Ausführungsvariante ist dadurch gekennzeichnet, dass die Antiresonanzeinheit eine Faserraumhöhe FH_Z1 aufweist und für das Verhältnis Faserraumhöhe FH_Z1 zum Faserkernradius R_Faser gilt:

$$\frac{FH\_Z1}{R\_Faser} = [0,8; 1,4]$$

Überraschend wurde festgestellt, dass die Geometrie der ARE-Bogeneinheit im Verhältnis zur Geometrie der ARE-Außeneinheit einen wesentlichen Einfluss auf das Leitungsverhalten einer ARHCF haben kann. Bei einer ARHCF, die wenigstens eine Antiresonanzeinheit mit dem angegebenen Parameter aufweist, koppeln die Moden höherer Ordnung im Kern mit den ARE-Moden und/oder DNE-Moden besonders effektiv. Dadurch werden die Moden höherer Ordnung im Kern gedämpft und die Hohlkernfaser über eine kürzere Laufstrecke grundmodig.

Eine weitere Ausführungsvariante ist dadurch gekennzeichnet, dass für das Verhältnis Faserraumhöhe FH_Z1 zum Faserkernradius R_Faser gilt:

- FH_Z1 / R_Faser größer oder gleich 0,8, insbesondere größer oder gleich 0,85, insbesondere größer oder gleich 0,9, insbesondere größer oder gleich 0,95, insbesondere größer oder gleich 1,0 und
- FH_Z1 / R_Faser kleiner oder gleich 1,4, insbesondere kleiner oder gleich 1,35, insbesondere kleiner oder gleich 1,3, insbesondere kleiner oder gleich 1,2.

Die vorgegebenen Intervalle ermöglichen eine weitere Optimierung der Kopplung zwischen Moden höherer Ordnung im Kern sowie den ARE-Moden und/oder DNE-Moden. Somit wird die Laufstrecke, innerhalb derer die Hohlkernfaser grundmodig wird, weiter verkürzt.

Überraschend wurde festgestellt, dass die Geometrie der ARE-Bogeneinheit nicht nur die Grundmodigkeit, sondern auch die Dämpfung der ARHCF beeinflusst. Eine weitere Ausführungsvariante ist dadurch gekennzeichnet, dass für das Verhältnis Faserraumhöhe FH_Z1 zum zweifachen Radius der ARE-Bogeneinheit FB_R gilt:

$$\frac{FH\_Z1}{2 * FB\_R} \leq 2{,}5 \text{ , insbesondere } \leq 1{,}3$$

Der zweifache Radius der ARE-Bogeneinheit FB_R entspricht einem Durchmesser der ARE-Bogeneinheit. Diese Ausführungsvariante zeichnet sich dadurch aus, dass die Dämpfung der Grundmode besonders gering ist.

Eine weitere Ausführungsvariante ist dadurch gekennzeichnet, dass für das Verhältnis Faserraumhöhe FH_Z1 zum zweifachen Radius der ARE-Bogeneinheit FB_R gilt:

- FH_Z1 / (2 * FB_R) kleiner oder gleich 1,2, insbesondere kleiner oder gleich 1,05, insbesondere kleiner oder gleich 1,0, insbesondere kleiner oder gleich 0,9, insbesondere kleiner oder gleich 0,85, insbesondere kleiner oder gleich 0,8; und
- FH_Z1 / (2 * FB_R) größer oder gleich 0,1, insbesondere größer oder gleich 0,125, insbesondere größer oder gleich 0,15, insbesondere größer oder gleich 0,2, insbesondere größer oder gleich 0,4, insbesondere größer oder gleich 0,5.

Die vorgegebenen Intervalle ermöglichen eine weitere Optimierung der Dämpfung der Grundmode.

Eine weitere Ausführungsvariante ist dadurch gekennzeichnet, dass jede Antiresonanzeinheit eine ARE-Bogeneinheit aufweist, angeordnet in dem jeweils ersten Innenraum der ARE-Außeneinheit. Durch die Nutzung von jeweils einer ARE-Bogeneinheit in jeder Antiresonanzeinheit der Hohlkernfaser ergibt sich eine verbesserte Kopplung zwischen Moden höherer Ordnung im Kern und den DNE-Moden.

Eine weitere Ausführungsvariante ist dadurch gekennzeichnet, dass der Betrag der Abweichung des ersten Kreisradius FA_R vom zweiten Kreisradius FI_R kleiner als 5 % des ersten Kreisradius FA_R ist, insbesondere kleiner als 3 %, insbesondere kleiner als 2 %, insbesondere kleiner 1 % ist. Produktionsbegingt ist es komplex, die Abweichung zwischen dem ersten Kreisradius FA_R der ARE-Außeneinheit und dem zweiten Kreisradius FI_R der ARE-Inneneinheit zu reduzieren. Nur durch effiziente und präzise Heißprozesse können Rohre, insbesondere aus Quarzglas, hergestellt werden, die diese Anforderungen erfüllen. Diese Ausführungsvariante führt zu einer weiteren Reduktion der Streuverluste in der ARHCF.

Eine weitere Ausführungsvariante ist dadurch gekennzeichnet, dass die antiresonante Hohlkernfaser drei, vier, fünf, sechs, sieben oder acht Antiresonanzeinheiten aufweist, insbesondere, dass die antiresonante Hohlkernfaser eine ungerade Anzahl an Antiresonanzeinheiten aufweist. Diese Ausführungsvariante ermöglicht eine weitere Optimierung der Dämpfung der Grundmode.

Eine weitere Ausführungsvariante ist dadurch gekennzeichnet, dass die Antiresonanzeinheiten asymmetrisch an der Innenfläche des Mantels angeordnet sind. Dadurch werden im Kern die Moden höherer Ordnung gedämpft und die Hohlkernfaser über eine kürzere Laufstrecke grundmodig.

Eine weitere Ausführungsvariante ist dadurch gekennzeichnet, dass wenigstens eine der Antiresonanzeinheiten wenigstens eines der folgenden Merkmale aufweist:

- die ARE-Außeneinheit und/oder die ARE-Inneneinheit und/oder die ARE-Bogeneinheit umfasst einen amorphen Festkörper, insbesondere ein Glas, insbesondere Quarzglas,
- die ARE-Außeneinheit und/oder die ARE-Inneneinheit und/oder die ARE-Bogeneinheit besteht aus einem amorphen Festkörper, insbesondere aus einem Glas, insbesondere Quarzglas,
- die ARE-Außeneinheit und/oder die ARE-Inneneinheit und/oder die ARE-Bogeneinheit sind materialeinheitlich, insbesondere ein Glas mit einem Brechungsindex von mindestens 1,4, insbesondere 1,4 bis 3, insbesondere 1,4 bis 2,8 umfassen oder daraus bestehen, und
- eine Wandstärke der ARE-Außeneinheit und der ARE-Inneneinheit und der ARE-Bogeneinheit ist im Wesentlichen gleich.

Diese Ausführungsvarianten der Antiresonanzeinheiten sind optimiert auf eine verlustarme Leitung von Signalen bei einer Wellenlänge von zwischen 1,0 μm und 2,5 μm.

Eine weitere Ausführungsvariante ist dadurch gekennzeichnet, dass die Wellenleiterverluste der antiresonanten Hohlkernfaser um mindestens einen Faktor 50 kleiner sind als bei einer antiresonanten Hohlkernfaser ohne Bogeneinheit, bei ansonsten gleichen Designparametern. Die in den Ausführungsvarianten beschriebene ARE-Bogeneinheit ermöglicht, dass

- die Grundmode im Kern nur in äußerst geringen Umfang mit den ARE- und/oder DNE-Modenkoppelt, aber gleichzeitig
- die Moden höherer Ordnung im Kern effektiv mit den verlustbehafteteren ARE- und DNE-Modenkoppeln.

Daraus resultiert eine ARHCF, welche einerseits auf einer kurzen Laufstrecke grundmodig wird und andererseits gleichzeitig nur eine geringe Dämpfung der Grundmode aufweist.

Eine weitere Ausführungsvariante ist dadurch gekennzeichnet, dass die antiresonante Hohlkernfaser wenigstens eines der folgenden Merkmale aufweist:

- eine fundamentale Dämpfung von weniger als 1,0 dB/km, insbesondere von weniger als 0,5 dB/km, insbesondere von weniger als 0,25 dB/km, insbesondere weniger als 0,15 dB/km bei einer transportierten Wellenlänge zwischen 1,0 μm und 2,5 μm, und
- eine fundamentale Dämpfung von weniger als 1 dB/km bei einer transportierten Wellenlänge bis zu 0,8 μm.

Diese Ausführungsvariante der ARHCF eignet sich aufgrund der geringen Dämpfung der Grundmode besonders für die Nutzung in Datencentern.

Eine weitere Ausführungsvariante ist dadurch gekennzeichnet, dass ein Unterschied in einer fundamentalen Dämpfung zwischen einer geraden und einer auf einen Durchmesser von 10 mm aufgespulten antiresonanten Hohlkernfaser kleiner ist als zwei Größenordnungen, insbesondere kleiner als eine Größenordnung, insbesondere kleiner als die Hälfte einer Größenordnung.

Eine weitere Ausführungsvariante ist dadurch gekennzeichnet, dass für den ersten Kreisradius FA_R gilt:

- kleiner als 30 μm, insbesondere kleiner als 20 μm, insbesondere kleiner als 17,5 μm, insbesondere kleiner oder gleich 16,5 μm, insbesondere kleiner oder gleich 15,75 μm, und/oder
- größer als 5 μm, insbesondere größer als 10 μm, insbesondere größer oder gleich 11,5 μm, insbesondere größer oder gleich 12,25 μm.

Daraus resultiert eine ARHCF, welche nur eine geringe Dämpfung der Grundmode aufweist.

Eine weitere Ausführungsvariante ist dadurch gekennzeichnet, dass mindestens eine ARE-Außeneinheit wenigstens eines der folgenden Merkmale aufweist:

- der erste Kreisradius FA_R ist kleiner 25 μm, insbesondere kleiner 15 μm,
- der erste Kreisradius FA_R ist größer 5 μm, insbesondere größer 7 μm,
- der erste Kreisradius FA_R ist kleiner oder gleich 16,5 mm, insbesondere kleiner oder gleich 15,75 mm,
- der erste Kreisradius FA_R ist größer oder gleich 11,5 μm, insbesondere größer oder gleich 12,25 μm,
- der erste Mittelpunktswinkel FA_MW ist kleiner 345°, insbesondere kleiner 340°; insbesondere kleiner 320°, insbesondere kleiner 310°
- der erste Mittelpunktswinkel FA_MW ist größer 220°, insbesondere größer 250°, insbesondere größer 270°, insbesondere größer 280°.

Daraus resultiert eine ARHCF, welche einerseits auf einer kurzen Laufstrecke grundmodig wird und andererseits nur eine geringe Dämpfung der Grundmode aufweist.

Eine weitere Ausführungsvariante ist dadurch gekennzeichnet, dass mindestens eine ARE-Inneneinheit wenigstens eines der folgenden Merkmale aufweist:

- der zweite Kreisradius FI_R ist kleiner 25 μm, insbesondere kleiner 15 μm,
- der zweite Kreisradius FI_R ist größer 5 μm, insbesondere größer 7 μm,
- der zweite Kreisradius FI_R ist kleiner oder gleich 16,5 μm, insbesondere kleiner oder gleich 15,75 μm;
- der zweite Kreisradius FI_R ist größer oder gleich 11,5 μm, insbesondere größer oder gleich 12,25 μm,
- der zweite Mittelpunktswinkel FI_MW ist kleiner 130°, insbesondere kleiner 120°, insbesondere kleiner 100°; und
- der zweite Mittelpunktswinkel FI_MW ist größer 40°, insbesondere größer 50°.

Daraus resultiert eine ARHCF, welche einerseits auf einer kurzen Laufstrecke grundmodig wird und andererseits nur eine geringe Dämpfung der Grundmode aufweist.

Eine weitere Ausführungsvariante ist dadurch gekennzeichnet, dass mindestens eine ARE-Bogeneinheit wenigstens eines der folgenden Merkmale aufweist:

- 
- Radius der ARE-Bogeneinheit FB_R ist kleiner 15 μm, insbesondere kleiner 12,5 μm, insbesondere kleiner 11 μm, insbesondere keiner 9,5 μm
- Radius der ARE-Bogeneinheit FB_R ist größer 0,75 μm, insbesondere größer 1 μm, insbesondere größer 2,5μm.

Daraus resultiert eine ARHCF, welche auf einer kurzen Laufstrecke grundmodig wird.

Eine weitere Ausführungsvariante ist dadurch gekennzeichnet, dass wenigstens eine der Antiresonanzeinheiten wenigstens eines der folgenden Merkmale aufweist:

- eine Wandstärke der ARE-Außeneinheit und/oder der ARE-Inneneinheit und/oder der ARE-Bogeneinheit beträgt zwischen 0,1 μm und 2,5 μm, insbesondere zwischen 0,15 μm und 1,5 μm, insbesondere zwischen 0,25 μm und 0,75 μm, insbesondere zwischen 0,35 μm und 0,65 μm, insbesondere 0,5 μm,
- eine Wandstärke der ARE-Außeneinheit und/oder der ARE-Inneneinheit und/oder der ARE-Bogeneinheit beträgt bei einer Signalwellenlänge von 1550 nm im ersten Transmissionsfenster zwischen 0,35 μm und 0,65 μm, insbesondere zwischen 0,4 μm und 0,6 μm, insbesondere 0,5 μm,
- eine Wandstärke der ARE-Außeneinheit und/oder der ARE-Inneneinheit und/oder der ARE-Bogeneinheit beträgt bei einer Signalwellenlänge von 1550 nm im zweiten Transmissionsfenster zwischen 0,75 μm und 1,25 μm, insbesondere zwischen 0,9 μm und 1,1 μm, insbesondere 1 μm.

Bei einer ARHCF, die insbesondere eine ARE-Bogeneinheit mit dem angegebenen Wandstärken aufweist und insbesondere bei einer transportierten Wellenlänge zwischen 1,0 μm und 2,5 μm, koppeln die Moden höherer Ordnung im Kern besonders effektiv mit den DNE-Moden, welche stärker verlustbehaftet sind. Dadurch werden im Kern die Moden höherer Ordnung gedämpft und die Hohlkernfaser über eine kürzere Laufstrecke grundmodig.

Die in der Beschreibung offenbarten Eigenschaften und Merkmale können für verschiedene Ausgestaltungsformen der beanspruchten Erfindung sowohl getrennt als auch in beliebiger Kombination miteinander wesentlich sein.

Die Erfindung wird im Folgenden durch Figuren weiter beispielhaft illustriert. Die Erfindung ist nicht auf die Figuren beschränkt.

**Figuren**

Es zeigen

Fig. 1    eine kreisbogenartig ausgestaltete ARE-Außeneinheit,

Fig. 2    eine kreisbogenartig ausgestaltete ARE-Inneneinheit,

Fig. 3    eine kreisförmig ausgestaltete ARE-Bogeneinheit,

Fig. 4    einen Teil einer Antiresonanzeinheit sowie eine Ausschnittsvergrößerung einer Nahtlinie,

Fig. 5    eine Antiresonanzeinheit sowie eine Ausschnittsvergrößerung einer Berührungsnaht,

Fig. 6    einen Querschnitt durch einen Teil einer antiresonanten Hohlkernfaser,

Fig. 7    einen Querschnitt durch eine antiresonante Hohlkernfaser,

Fig. 8    ein Diagramm eines effektiven Modenindex Δ neff (DNE), aufgetragen über dem Verhältnis des zweifachen Radius der ARE-Bogeneinheit FB_R zum Faserkernradius R_Faser,

Fig. 9    ein Diagramm eines effektiven Modenindex Δ neff (ARE), aufgetragen über dem Verhältnis Faserraumhöhe FH_Z1 zum Faserkernradius R_Faser,

Fig. 10    ein Diagramm des Unterschiedes in den Wellenleiterverlusten zwischen der Grundmode und der Mode höherer Ordnung im Kern, aufgetragen über dem Verhältnis der Faserraumhöhe FH_Z1 zum Faserkernradius R_Faser,

Fig. 11 ein Diagramm des Wellenleiterverlusts der Grundmode als Funktion des Verhältnisses der Faserraumhöhe FH_Z1 zum zweifachen Radius der ARE-Bogeneinheit FB_R, und

Fig. 12 ein weiteres Diagramm des effektiven Modenindex $\Delta$ neff (DNE), aufgetragen über dem Verhältnis des zweifachen Radius der ARE-Bogeneinheit FB_R zum Faserkernradius R_Faser.

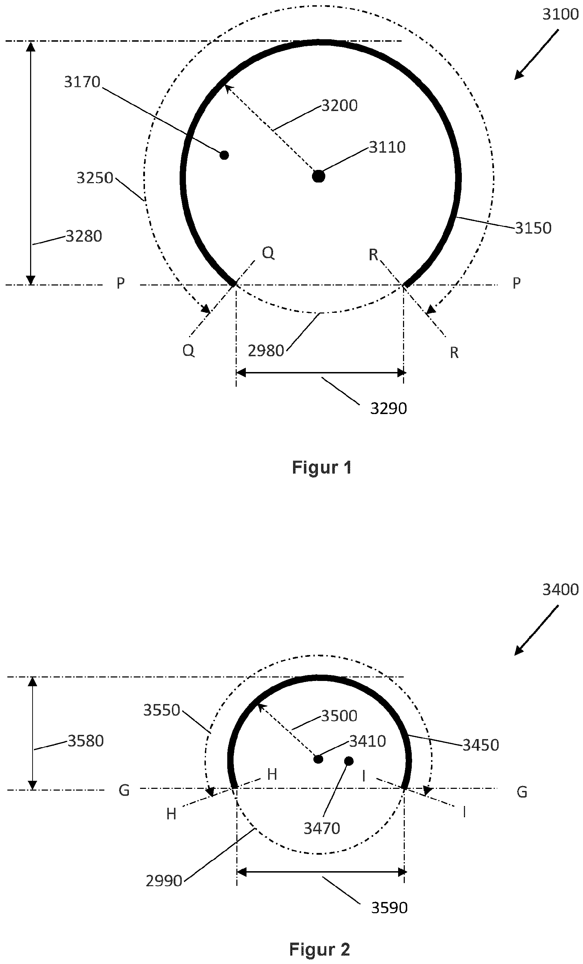

Die **Figur 1** zeigt einen Querschnitt durch eine ARE-Außeneinheit 3100. Die ARE-Außeneinheit 3100 hat eine rohrartige Struktur, die einen kreisbogenartigen Querschnitt aufweist. Die ARE-Außeneinheit 3100 erstreckt sich entlang einer ersten Körperlängsachse 3110. In Figur 1 erstreckt sich die ARE-Außeneinheit 3100 folglich in die Zeichnungsebene.

Die ARE-Außeneinheit 3100 weist eine ARE-Außeneinheitswandung 3150 auf. Insbesondere kann die ARE-Außeneinheitswandung 3150 ein Material umfassen oder daraus bestehen, welches für ein Arbeitslicht der optischen Faser transparent ist, beispielsweise Glas, insbesondere dotiertes oder nicht dotiertes Quarzglas (SiO2).

In einer Ausführungsvariante weist die ARE-Außeneinheitswandung 3150 eine Wandstärke zwischen 0,25 $\mu$m 0,75 $\mu$m, insbesondere zwischen 0,35 $\mu$m und 0,65 $\mu$m, insbesondere 0,5 $\mu$m auf.

Der in Figur 1 gezeigte Querschnitt verdeutlicht, dass die ARE-Außeneinheit 3100 einen kreisbogenartigen Querschnitt aufweist. Unter dem Begriff "Kreisbogen" wird im Rahmen der Erfindung ein Teilstück einer Kreislinie verstanden. Zwei Punkte auf einem Kreis teilen die Kreislinie in zwei Kreisbögen. Im Rahmen dieser Erfindung wird ein Element als "kreisbogenartig" beschreiben, wenn seine äußere Form dem Verlauf eines der besagten zwei Kreisbögen folgt. Zur Verdeutlichung ist in Figur 1 ein erster Kreis 2980 eingezeichnet. Dieser erste Kreis 2980 wird durch die beiden Schnittlinien Q-Q und R-R in zwei Kreisbögen aufgeteilt. Der Querschnitt der ARE-Außeneinheit 3100 folgt einem der beiden Kreisbögen.

Weiterhin ist eine Schnittlinie P-P eingezeichnet, welche durch die beiden Schnittpunkte der beiden Schnittlinien Q-Q und R-R mit dem ersten Kreis 2980 verläuft. Als erste Sehne der ARE-Außeneinheit 3100 wird jene Strecke bezeichnet, die auf der Schnittlinie P-P liegt und durch die Schnittlinien Q-Q und R-R begrenzt ist. Als erste Sehnenlänge 3290 wird die Länge der ersten Sehne bezeichnet.

Die ARE-Außeneinheit 3100 weist einen ersten Kreisradius FA_R 3200 auf. Dieser erste Kreisradius FA_R 3200 beschreibt den Abstand der ARE-Außeneinheitswandung 3150 zur ersten Körperlängsachse 3110.

Die ARE-Außeneinheit 3100 weist eine erste Segmenthöhe 3280 auf. Diese erste Segmenthöhe 3280 beschreibt die Länge einer Geraden, die senkrecht auf der ersten Sehne steht und bis zum Scheitelpunkt der ARE-Außeneinheitswandung 3150 läuft.

Die ARE-Außeneinheit 3100 weist einen ersten Mittelpunktswinkel FA_MW 3250 auf. Dieser erste Mittelpunktswinkel FA_MW 3250 beschreibt den Winkel, dessen Scheitel im Mittelpunkt des ersten Kreises 2980 liegt und dessen Schenkel die Begrenzungspunkte des Kreisbogens (hier die Schnittpunkte des ersten Kreises 2980 mit den Schnittlinien Q-Q und R-R) schneiden. Ein Vollkreis weist eine Gradzahl von 360° auf. Da die ARE-Außeneinheit 3100 kreisbogenartig ausgestaltet ist, ist der erste Mittelpunktswinkel FA_MW 325 kleiner als 360°.

Die ARE-Außeneinheit 3100 weist einen durch die ARE-Außeneinheitswandung 3150 und die erste Sehne begrenzten ersten Innenraum 3170 auf.

In einer Ausführungsvariante kann die ARE-Außeneinheit 3100 wenigstens eines der folgenden Merkmale aufweisen:

- der erste Kreisradius FA_R 3200 ist kleiner 25 $\mu$m, insbesondere kleiner 15 $\mu$m,
- der erste Kreisradius FA_R 3200 ist größer 5 $\mu$m, insbesondere größer 7 $\mu$m,
- der erste Kreisradius FA_R 3200 ist kleiner oder gleich 16,5 $\mu$m, insbesondere kleiner oder gleich 15,75 $\mu$m,
- der erste Kreisradius FA_R 3200 ist größer oder gleich 11,5 $\mu$m, insbesondere größer oder gleich 12,25 $\mu$m,
- der erste Mittelpunktswinkel 3250 FA_MW ist kleiner 345°, insbesondere kleiner 340°; insbesondere kleiner 320°, insbesondere kleiner 310°
- der erste Mittelpunktswinkel 3250 FA_MW ist größer 220°, insbesondere größer 250°, insbesondere größer 270°, insbesondere größer 280°.

Die **Figur 2** zeigt einen Querschnitt durch eine ARE-Inneneinheit 3400. Die ARE-Inneneinheit 3400 ist eine rohrartige Struktur, die einen kreisbogenartigen Querschnitt aufweist. Die ARE-Inneneinheit 3400 erstreckt sich entlang einer zweiten Körperlängsachse 3410. In Figur 2 erstreckt sich die ARE-Inneneinheit 3400 folglich in die Zeichnungsebene.

Die ARE-Inneneinheit 3400 weist eine ARE-Inneneinheitswandung 3450 auf. Insbesondere kann die ARE-Inneneinheitswandung 3450 ein Material umfassen oder daraus bestehen, welches für ein Arbeitslicht der optischen Faser transparent ist, beispielsweise Glas, insbesondere dotiertes oder nicht dotiertes Quarzglas (SiO2). In einer Ausführungsvariante weist die ARE-Inneneinheitswandung 3450 eine Wandstärke zwischen 0,25 $\mu$m 0,75 $\mu$m, insbesondere zwischen 0,35 $\mu$m und 0,65 $\mu$m, insbesondere 0,5 $\mu$m auf.

Die ARE-Inneneinheit 3400 weist einen kreisbogenartigen Querschnitt auf. Zur Verdeutlichung ist in Figur 2 ein zweiter Kreis 2990 eingezeichnet. Dieser zweite Kreis 2990 wird durch die beiden Schnittlinien H-H und I-I in zwei Kreisbögen aufgeteilt. Der Querschnitt der ARE-Inneneinheit 3400 folgt einem der beiden Kreisbögen.

Weiterhin ist eine Schnittlinie G-G eingezeichnet, welche durch die beiden Schnittpunkte der beiden Schnittlinien H-H und I-I mit dem zweiten Kreis 2990 verläuft. Als zweite Sehne der ARE-Inneneinheit 3400 wird jene Strecke bezeichnet, die auf der Schnittlinie G-G liegt und durch die Schnittlinien H-H und I-I begrenzt ist. Als zweite Sehnenlänge 3590 wird die Länge der zweiten Sehne bezeichnet.

Die ARE-Inneneinheit 3400 weist eine zweite Segmenthöhe 3580 auf. Diese zweite Segmenthöhe 3580 beschreibt die Länge einer Geraden, die senkrecht auf der zweiten Sehne steht und bis zum Scheitelpunkt der ARE-Inneneinheitswandung 3450 läuft.

Weiterhin weist die ARE-Inneneinheit 3400 einen zweiten Kreisradius FI_R 3500 auf. Dieser zweite Kreisradius FI_R 3500 beschreibt den Abstand der ARE-Inneneinheitswandung 3450 zur zweiten Körperlängsachse 3410.

Die ARE-Inneneinheit 3400 weist einen zweiten Mittelpunktswinkel FI_MW 3550 auf. Dieser zweite Mittelpunktswinkel FI_MW 3550 beschreibt den Winkel, dessen Scheitel im Mittelpunkt des zweiten Kreises 2990 liegt und dessen Schenkel die Begrenzungspunkte des Kreisbogens schneiden (hier die Schnittpunkte des zweiten Kreises 2990 mit den Schnittlinien H-H und I-I). Ein Vollkreis weist eine Gradzahl von 360° auf. Da die ARE-Inneneinheit 3400 kreisbogenartig ausgestaltet ist, ist der zweite Mittelpunktswinkel FI_MW 3550 kleiner als 360°.

Die ARE-Inneneinheit 3400 weist einen durch die ARE-Inneneinheitswandung 3450 und die zweite Sehne begrenzten zweite Innenraum 3470 auf.

Die Figuren 1 und 2 zeigen einen Querschnitt, also eine axiale Aufsicht auf die ARE-Außeneinheit 3100 sowie die ARE-Inneneinheit 3400. In der dargestellten zweidimensionalen Betrachtung auf die jeweiligen Körperlängsachsen 3110 und 3410 weisen die ARE-Außeneinheit 3100 sowie die ARE-Inneneinheit 3400 einen kreisbogenartigen Querschnitt auf, was in einer dreidimensionalen Betrachtung einem rohrartigen Strukturelement entspricht.

Der jeweilige Kreisbogen der ARE-Außeneinheit 3100 und/oder der ARE-Inneneinheit 3400 sind im Wesentlichen kreisrund ausgestaltet, wobei insbesondere die Schwankung des ersten Kreisradius FA_R 3200 und/oder des zweiten Kreisradius FI_R 3500 über den Umfang der ARE-Außeneinheit 3100 und/oder der ARE-Inneneinheit 3400 nicht mehr als 10 %, bevorzugt nicht mehr als 5 %, weiter bevorzugt nicht mehr als 3 % beträgt.

In einer Ausführungsvariante kann die ARE-Inneneinheit 3400 wenigstens eines der folgenden Merkmale aufweisen:

- der zweite Kreisradius FI_R 3500 ist kleiner 25 $\mu$m, insbesondere kleiner 15 $\mu$m,
- der zweite Kreisradius FI_R 3500 ist größer 5 $\mu$m, insbesondere größer 7 $\mu$m,
- der zweite Kreisradius FI_R 3500 ist kleiner oder gleich 16,5 $\mu$m, insbesondere kleiner oder gleich 15,75 $\mu$m;
- der zweite Kreisradius FI_R 3500 ist größer oder gleich 11,5 $\mu$m, insbesondere größer oder gleich 12,25 $\mu$m,
- der zweite Mittelpunktswinkel FI_MW 3550 ist kleiner 130°, insbesondere kleiner 120°, insbesondere kleiner 100°; und
- der zweite Mittelpunktswinkel FI_MW 3550 ist größer 40°, insbesondere größer 50°.

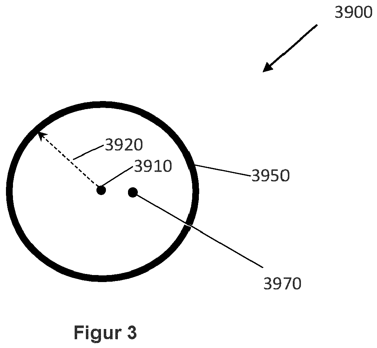

Die **Figur 3** zeigt eine ARE-Bogeneinheit 3900, welche eine rohrartige Struktur ist. Die ARE-Bogeneinheit 3900 erstreckt sich entlang einer dritten Körperlängsachse 3910. In Figur 3 erstreckt sich die ARE-Bogeneinheit 3900 folglich in die Zeichnungsebene.

Die ARE-Bogeneinheit 3900 weist eine Bogenwandung 3950 auf. Insbesondere kann die Bogenwandung 3950 ein Material umfassen oder daraus bestehen, welches für ein Arbeitslicht der optischen Faser transparent ist, beispielsweise Glas, insbesondere dotiertes oder nicht dotiertes Quarzglas (SiO2).

In einer Ausführungsvariante weist die Bogenwandung 3950 eine Wandstärke zwischen 0,25 $\mu$m 0,75 $\mu$m, insbesondere zwischen 0,35 $\mu$m und 0,65 $\mu$m, insbesondere 0,5 $\mu$m auf.

Die ARE-Bogeneinheit 3900 weist einen Radius FB_R 3920 auf. Dieser Radius FB_R 3920 beschreibt den Abstand der Bogenwandung 3950 zur ersten Körperlängsachse 3910. Die ARE-Bogeneinheit 3900 weist einen durch die Bogenwandung 3950 begrenzten dritte Innenraum 3970 auf.

In einer Ausführungsvariante kann die ARE-Bogeneinheit 3900 wenigstens eines der folgenden Merkmale aufweisen:

- Radius der ARE-Bogeneinheit FB_R 3920 ist kleiner 15 $\mu$m, insbesondere kleiner 12,5 $\mu$m, insbesondere kleiner 11 $\mu$m, insbesondere keiner 9,5 $\mu$m

- Radius der ARE-Bogeneinheit FB_R 3920 ist größer 0,75 µm, insbesondere größer 1 µm, insbesondere größer 2,5µm.

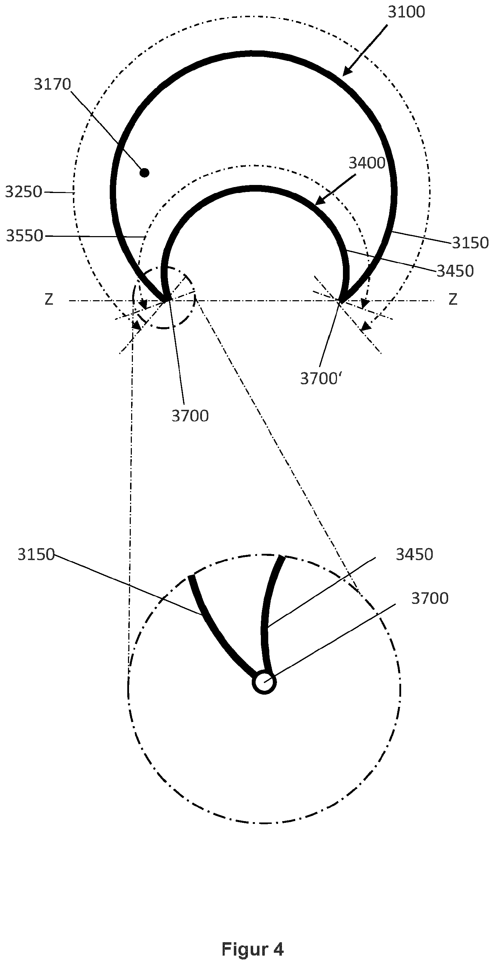

Die **Figur 4** zeigt Teile einer Hohlkernfaser, umfassend die ARE-Außeneinheit 3100 und die ARE-Inneneinheit 3400, wie dargestellt in den Figuren 1 und 2. Die ARE-Außeneinheit 3100 weist einen durch die ARE-Außeneinheitswandung 3150 zumindest partiell begrenzten erste Innenraum 3170 auf. Die kreisbogenartig ausgestaltete ARE-Inneneinheit 3400 ragt zumindest partiell in den ersten Innenraum 3170 hinein. Darunter wird verstanden, dass - im Querschnitt - die ARE-Inneneinheit 3400 im Wesentlichen oberhalb der ersten Sehne der ARE-Außeneinheit 3100 verläuft.

Die kreisbogenartig ausgestaltete ARE-Außeneinheit 3100 und die kreisbogenartig ausgestaltete ARE-Inneneinheit 3400 sind entlang zweier im Wesentlichen parallel zu der ersten Körperlängsachse 3110 angeordneten Verbindungsnähte 3700, 3700' miteinander verbunden. Dieser Verbund kann insbesondere durch einen Heißprozess erfolgt sein.

Zur Verdeutlichung ist in Figur 4 ein Bereich um die Verbindungsnaht 3700 vergrößert dargestellt. Der Verbund erfolgt zwischen

- einem ersten Endpunkt der ARE-Außeneinheitswandung 3150 der ARE-Außeneinheit 3100, und
- einem zweiten Endpunkt der ARE-Inneneinheitswandung 3450 der ARE-Inneneinheit 3400.

Da in Figur 4 ein Querschnitt dargestellt ist, verlaufen in der dreidimensionalen Hohlkernfaser 1000 die beiden Verbindungsnähte 3700, 3700' in die Zeichnungsebene hinein. Aufgrund von fertigungsbedingten Schwankungen kann es vorkommen, dass - insbesondere bereichsweise - der erste Endpunkt der ARE-Außeneinheitswandung 3150 nicht genau mit dem zweiten Endpunkt der ARE-Inneneinheitswandung zusammentrifft, um so die Verbindungsnähte 3700, 3700' zu bilden. Insbesondere zwei Abweichungen von dieser Positionierung der ARE-Inneneinheit 3400 können durch fertigungsbedingte Schwankungen auftreten:

1. Der erste Endpunkt der ARE-Außeneinheitswandung 3150 kann - insbesondere bereichsweise - auf der ARE-Inneneinheitswandung 3450 der ARE-Inneneinheit 3400 angeordnet sein und die ARE-Inneneinheit 3400 insofern teilweise aus dem ersten Innenraum 3170 herausragen. In diesem Fall kann teilweise nur die ARE-Inneneinheit 3400 stoffschlüssig mit der Innenfläche 2150 des Mantel 2000 verbunden werden. Letzteres kann vom Anteil des zweiten Mittelpunktswinkels FI_MW abhängen, der aus dem ersten Innenraum 3170 herausragen. Insbesondere kann im Querschnitt nicht mehr als 5 %, insbesondere nicht mehr als 2,5 %, insbesondere nicht mehr als 1 % des zweiten Mittelpunktswinkels FI_MW 3550 der ARE-Inneneinheit 3400 aus dem ersten Innenraum 3170 herausragen. Je geringer der Anteil des zweiten Mittelpunktswinkels FI_MW 3550 der aus dem ersten Innenraum 3170 herausragen, desto besser die Grundmodigkeit der ARHCF.

2. Der zweite Endpunkt der ARE-Inneneinheitswandung 3450 kann - insbesondere bereichsweise - auf der ARE-Außeneinheitswandung 3150 der ARE-Außeneinheit 3100 angeordnet sein und die ARE-Inneneinheit 3400 insofern vollständig in dem ersten Innenraum 3170 lagern. In diesem Fall kann teilweise nur die ARE-Außeneinheit 3100 stoffschlüssig mit der Innenfläche 2150 des Mantel 2000 verbunden werden. Letzteres hängt vom Anteil des zweite Mittelpunktswinkel FI_MW 3550, den es theoretisch zusätzlich bedürfte, um einen Kontakt zwischen den ersten Endpunkt und dem zweiten Endpunkt herzustellen. Insbesondere kann es im Querschnitt nicht mehr als 5 %, insbesondere nicht mehr als 2,5 %, insbesondere nicht mehr als 1 % des zweiten Mittelpunktswinkels FI_MW 3550 zusätzlich bedürfen, um theoretisch den Kontakt zwischen den ersten Endpunkt und dem zweiten Endpunkt herzustellen. Je geringer der benötigte Betrag des zweiten Mittelpunktswinkels FI_MW 3550 desto besser die Grundmodigkeit der ARHCF.

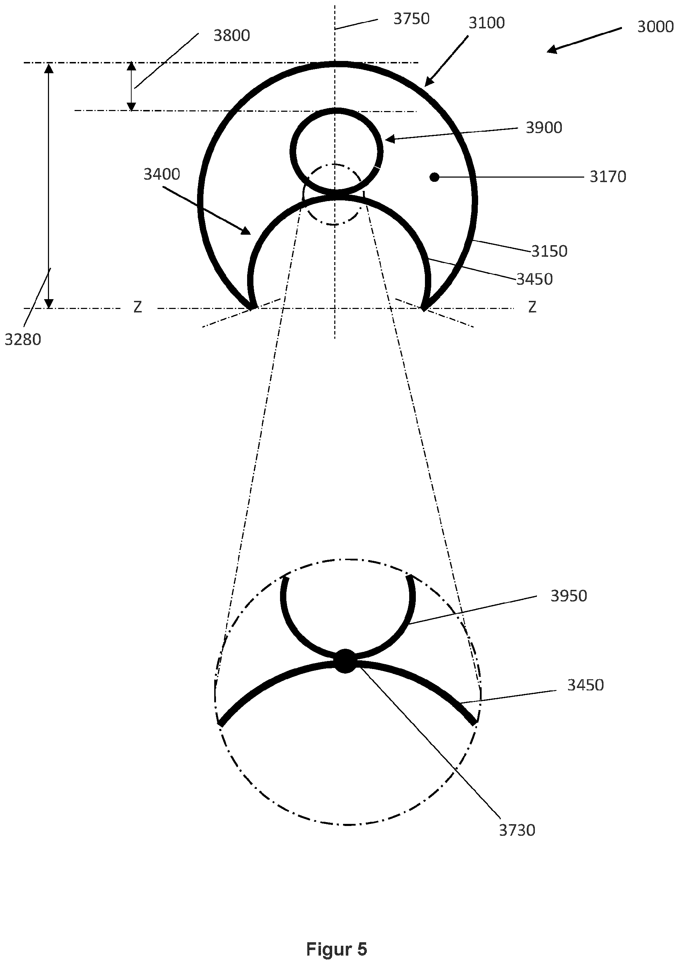

Die **Figur 5** zeigt eine Antiresonanzeinheit 3000, umfassend die kreisbogenartig ausgestaltete ARE-Außeneinheit 3100 sowie die kreisbogenartig ausgestaltete ARE-Inneneinheit 3400 - wie gezeigt in Figur 2 - ergänzt um die ARE-Bogeneinheit 3900, wie dargestellt in der Figur 3. Die ARE-Bogeneinheit 3900 dient als antiresonantes Element zur Reduzierung der Dämpfung und/oder Wellenleiterverluste der Grundmode und kann bei entsprechender Ausgestaltung die Dämpfung von Moden höheren im Kern erhöhen.

Die kreisbogenartig ausgestaltete ARE-Inneneinheit 3400 und die ARE-Bogeneinheit 3900 sind entlang einer im Wesentlichen parallel zu der ersten Körperlängsachse 3110 angeordneten Berührungslinie 3730 miteinander verbunden. Dieser Verbund kann insbesondere durch einen Heißprozess erfolgt sein. In einer Ausführungsvariante ist die Berührungslinie 3730 derart auf dem ARE-Inneneinheit 3400 angeordnet, dass ein Abstand zwischen Berührungslinie 3730 und erster Sehne maximal ist.

Die ARE-Außeneinheit 3100 weist einen durch die ARE-Außeneinheitswandung 3150 zumindest partiell begrenzten ersten Innenraum 3170 auf. Die ARE-Bogeneinheit 3900 ist in dem ersten Innenraum 3170 angeordnet.

Wie Figur 5 verdeutlicht, weist die Antiresonanzeinheit 3000 eine Faserraumhöhe FH_Z1 3800 auf. Diese Faserraumhöhe FH_Z1 3800 beschreibt die kürzeste Länge einer Geraden, welche zwischen den Scheitelpunkten der ARE-Außeneinheit 3100 und der ARE-Bogeneinheit 3900 verläuft. In einer Ausführungsvariante kann die Faserraumhöhe FH_Z1 3800 senkrecht auf der ersten Sehne steht und bis zum Scheitelpunkt der ARE-Außeneinheitswandung 3150 läuft. Die Faserraumhöhe FH_Z1 3800 beschreibt den freien Raum zwischen der ARE-Außeneinheit 3100 und der ARE-Bogeneinheit 3900.

Die drei Körperlängsachsen der ARE-Außeneinheit 3100, der ARE-Inneneinheit 3400 und der ARE-Bogeneinheit 3900 können im Wesentlichen auf einer Geraden 3750 liegen. Seitliche Abweichungen jeder der genannten Körperlängsachsen von der Geraden 3750 sind insbesondere begrenzt durch die fertigungsbedingten Toleranzen, insbesondere beträgt die Abweichung weniger als 5 %, insbesondere weniger als 2,5 %, insbesondere weniger als 1 % des ersten Kreisradius FA_R.

Zur Verdeutlichung ist in Figur 5 ein Bereich um die Berührungslinie 3730 vergrößert dargestellt. Der Verbund erfolgt zwischen

- einem Punkt auf der ARE-Inneneinheitswandung 3450 der ARE-Inneneinheit 3400, und
- einem Punkt auf der Bogenwandung 3950 der ARE-Bogeneinheit 3900.

Da in Figur 5 ein Querschnitt dargestellt ist, verläuft in der dreidimensionalen Antiresonanzeinheit 3000 die Berührungsnaht 3730 in die Zeichnungsebene.

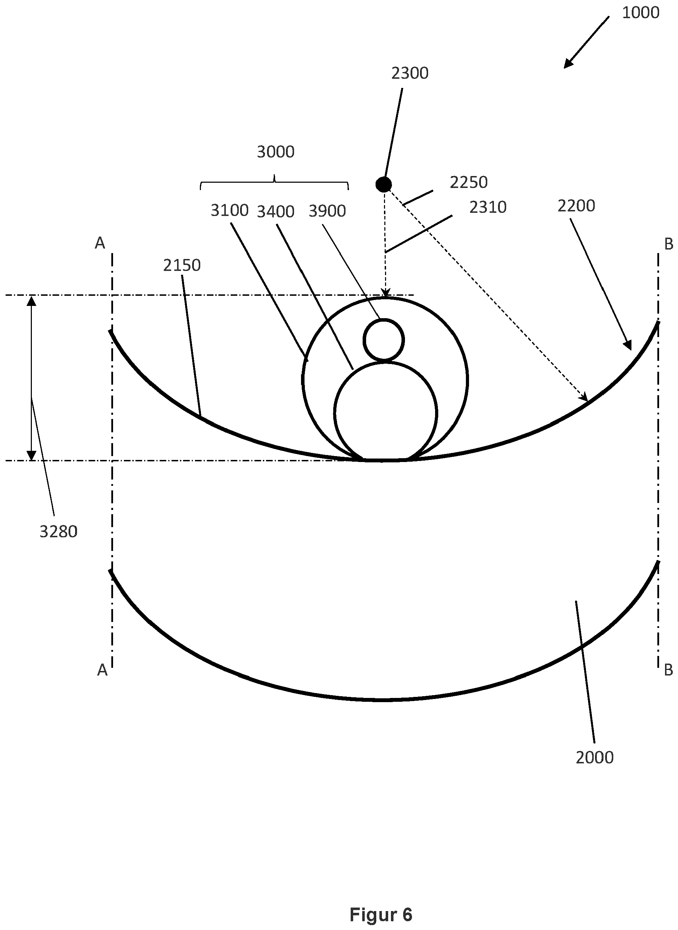

Die **Figur 6** zeigt einen Querschnitt durch einen Teil einer antiresonanten Hohlkernfaser 1000. Dargestellt ist ein Abschnitt der antiresonanten Hohlkernfaser 1000 zwischen zwei Schnittlinien A-A und B-B. Die antiresonante Hohlkernfaser 2400 weist einen Mantel 2000 auf. Der Mantel 2000 kann aus einem elongierten Hüllrohr in Kombination mit einem elongierten Mantelmaterial aufgebaut sein. Da in der dargestellten Ausführungsvariante das Mantelmaterial und das Hüllrohrmaterial materialidentisch ausgestaltet sind, ist der Übergang zwischen den beiden Materialien nicht markiert. Der Mantel 2000 weist einen Mantelinnenradius 2250 auf, welcher sich aus der Distanz der Faser-Längsachse 2300 der antiresonanten Hohlkernfaser zur Innenfläche 2150 ergibt. Auf der Innenfläche 2150 ist eine Antiresonanzeinheit 3000 angeordnet. Jene ist stoffschlüssig mit der Innenfläche 2150 des Mantels 2000 verbunden.

Sowohl die ARE-Außeneinheit 3100 als auch die ARE-Inneneinheit 3400 sind kreisbogenartig ausgestaltete. Abweichungen der ARE-Außeneinheitswandung 3150 und/oder ARE-Inneneinheitswandung 3450 von der idealen Kreisbogenform basieren insbesondere auf fertigungsbedingten Schwankungen. Insbesondere kann der erster Kreisradius FA_R 3200 und/oder der zweiter Kreisradius FI_R 3500 in der ARHCF nicht mehr als 10 %, insbesondere nicht mehr als 5 %, insbesondere nicht mehr als 2,5 % vom mittleren ersten Kreisradius FA_R 3200 und/oder mittleren zweiten Kreisradius FI_R 3500 abweichen, insbesondere sowohl azimutal über einen Kreisbogen - so dass ein elliptischer Verlauf entsteht - als auch an axial unterschiedlichen Stellen der ARHCF.

Die ARE-Bogeneinheit 3900 ist kreisförmig ausgestaltet. Abweichungen des Radius FB_R 3920 der ARE-Bogeneinheit 3900 von der idealen Kreisform basieren insbesondere auf fertigungsbedingten Schwankungen. Insbesondere kann der Radius FB_R 3920 der ARE-Bogeneinheit 3900 nicht mehr als 10 %, insbesondere nicht mehr als 5 %, insbesondere nicht mehr als 2,5 % vom mittleren Radius FB_R 3920 der ARE-Bogeneinheit 3900 abweichen, insbesondere sowohl azimutal über einen Kreis - so dass ein elliptischer Verlauf entsteht - als auch an axial unterschiedlichen Stellen der ARHCF.

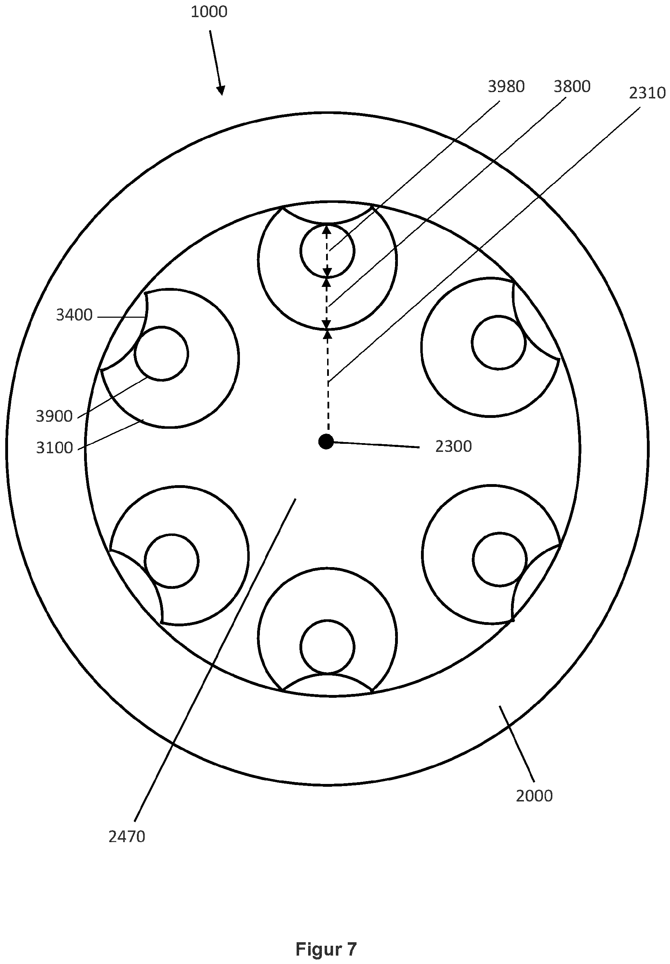

Die **Figur 7** zeigt einen Querschnitt durch eine antiresonante Hohlkernfaser 1000. Die antiresonante Hohlkernfaser 1000 weist einen hohlen Kern 2470 auf. Durch den hohlen Kern 2470 kann eine elektromagnetische Welle propagieren. Die Hohlkernfaser 1000 weist einen Kernradius 2310 auf, welcher sich aus der kürzesten Distanz zwischen der Längsachse 2300 der antiresonanten Hohlkernfaser 1000 und der ARE-Außeneinheit 3100 ergibt. Die Figur 7 verdeutlicht die Anordnung der Mehrzahl an Antiresonanzeinheiten 3000 - auch als ARE bezeichnet - auf der den Hohlkern 2470 begrenzenden Innenfläche 2150. In einer Ausführungsvariante kann die antiresonante Hohlkernfaser 1000 drei, vier, fünf, sechs, sieben oder acht Antiresonanzeinheiten 3000 aufweisen. In Figur 7 weist die antiresonante Hohlkernfaser 1000 sechs Antiresonanzeinheiten 3000 auf. In dieser Ausführungsvariante sind die Antiresonanzeinheiten 3000 symmetrisch an der Innenfläche 2150 des Mantels 2000 angeordnet.

Die in Figur 7 gezeigte antiresonante Hohlkernfaser 1000 zeichnet sich dadurch aus, dass ein Betrag einer Abweichung des ersten Kreisradius FA_R 3200 vom zweiten Kreisradius FI_R 3500 kleiner als 10 % des ersten Kreisradius FA_R 3200 ist.

Bei der in Figur 7 gezeigten antiresonanten Hohlkernfaser 1000 kann die ARE-Außeneinheit 3100 und/oder die ARE-Inneneinheit 3400 und/oder die ARE-Bogeneinheit 3900 ein Quarzglas aufweisen oder aus diesem bestehen. Weiterhin kann die Wandstärke der ARE-Außeneinheit 3100 und/oder der ARE-Inneneinheit 3400 und/oder der ARE-Bogeneinheit 3900 in Abhängigkeit von der in der ARHCF transportierten Wellenlänge ausgelegt sein. So kann die antiresonante Hohlkernfaser 1000 eine Wandstärke der ARE-Außeneinheit 3100 und/oder der ARE-Inneneinheit 3400 und/oder der ARE-Bogeneinheit 3900 bei einer Signalwellenlänge von 1550 nm im ersten Transmissionsfenster zwischen

0,35 μm und 0,65 μm, insbesondere zwischen 0,4 μm und 0,6 μm betragen. Sollte die antiresonante Hohlkernfaser 1000 bei einer Signalwellenlänge von 1550 nm im zweiten Transmissionsfenster betrieben werden, kann die Wandstärke der ARE-Außeneinheit 3100 und/oder der ARE-Inneneinheit 3400 und/oder der ARE-Bogeneinheit 3900 zwischen 1,25 μm und 0,75 μm, insbesondere zwischen 1,1 μm und 0,9 μm betragen.

Insbesondere kann die Wandstärke der ARE-Außeneinheit 3100 und der ARE-Inneneinheit 3400 und der ARE-Bogeneinheit 3900 im Wesentlichen gleich sein. Insbesondere kann sich die Wandstärke der ARE-Außeneinheit 3100 und der ARE-Inneneinheit 3400 und der ARE-Bogeneinheit 3900 um weniger als 10 %, insbesondere weniger als 5 % von der Wandstärke der ARE-Außeneinheit 3100 unterscheiden.

Die in Figur 7 gezeigte antiresonante Hohlkernfaser 1000 kann sich weiterhin dadurch auszeichnen, dass der Faserkernradius R_Faser 2310 kleiner als 30 μm, insbesondere kleiner als 25 μm und insbesondere kleiner als 20 μm ist. Weiterhin kann sich die antiresonante Hohlkernfaser 1000 dadurch auszeichnen, dass der Faserkernradius R_Faser 2310 größer als 5 μm, insbesondere größer als 10 μm, insbesondere größer als 15 μm ist. Insbesondere kann die antiresonante Hohlkernfaser 1000 einen Faserkernradius R_Faser 2310 von 17,25 μm aufweisen. Insbesondere kann die antiresonante Hohlkernfaser 1000 einen Faserkernradius R_Faser 2310 von 17,25 μm aufweisen.

In einer Ausführungsvariante der antiresonanten Hohlkernfaser 1000 kann der erste Kreisradius FA_R 3200 kleiner oder gleich 15,75 μm und größer oder gleich 12,25 μm sein.

Die Figur 7 verdeutlicht einige die Anordnung einiger, die Geometrie der antiresonante Hohlkernfaser 1000 beschreibenden, Parameter:

- der Durchmesser FB_D 3980 der ARE-Bogeneinheit 3900, also dem zweifachen Betrag des Radius FB_R 3920 der ARE-Bogeneinheit 3900,
- die Faserraumhöhe FH_Z1 3800 der Antiresonanzeinheit 3000, welche die kürzeste Distanz zwischen den Scheitelpunkten der ARE-Außeneinheit 3100 und der ARE-Bogeneinheit 3900 beschreibt, und
- der Kernradius 2310 der antiresonanten Hohlkernfaser 1000, welcher die kürzeste Distanz zwischen der Längsachse 2300 und der ARE-Außeneinheit 3100 beschreibt.

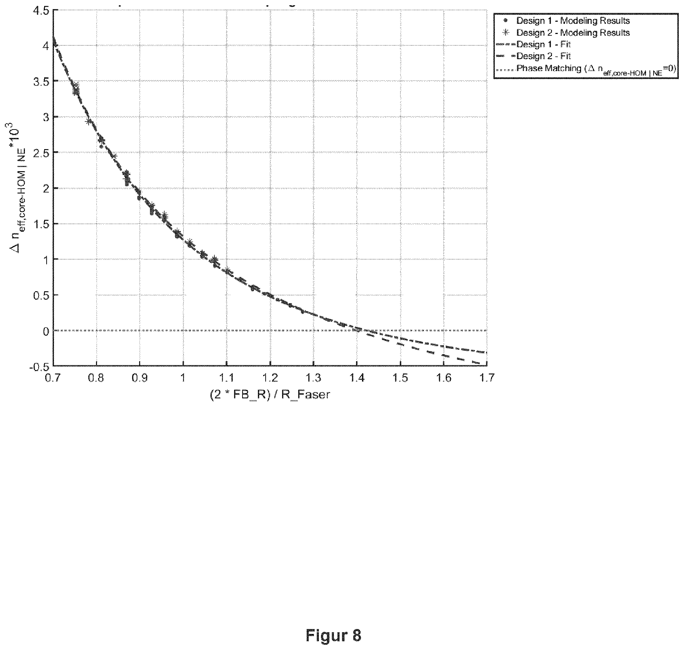

Die **Figuren 8 bis 12** zeigen die Ergebnisse von Simulationen einer antiresonanten Hohlkernfaser 1000 mit ARE-Bogeneinheiten. Für die numerischen Berechnungen wurde der Finite-Elemente-Methode COMSOL Mode Solver verwendet. Dabei wurde eine perfekt angepasste Schicht (perfectly matched layer PML) mit einer Dicke von 10 μm an der äußeren Grenzfläche der optischen Faser implementiert, um die Abstrahleigenschaften der Wellenleiterstruktur zu untersuchen, in dem die radial abgestrahlte Lichtenergie absorbiert wird.

Die Ausgangsbasis für die Simulationen war eine antiresonante Hohlkernfaser 1000, welche analog zu jener in Figur 7 gezeigten antiresonanten Hohlkernfaser 1000 aufgebaut ist. Diese antiresonante Hohlkernfaser 1000 umfasst einen Fasermantel 2000, der einen Faserkernradius R_Faser 2310 aufweist. Weiterhin umfasst die antiresonante Hohlkernfaser 1000 sechs Antiresonanzeinheiten 3000,

- welche jeweils eine ARE-Außeneinheit 3100 und eine ARE-Inneneinheit 3400 umfassen,
- wobei die kreisbogenartig ausgestaltete ARE-Außeneinheit 3100 und die kreisbogenartig ausgestaltete ARE-Inneneinheit 3400 entlang zweier Nahtlinien 3700, 3700' derart miteinander verbunden sind, dass die ARE-Inneneinheit 3400 zumindest partiell hineinragt in einen ersten Innenraum 3170 der ARE-Außeneinheit 3100.

In jeder der Antiresonanzeinheiten 3000 ist

- eine ARE-Bogeneinheit 3900 innerhalb des ersten Innenraums 3170 angeordnet, wobei
- die ARE-Bogeneinheit 3900 kreisförmig ausgestaltet, und
- die ARE-Bogeneinheit 3900 mit der ARE-Inneneinheit 3400 entlang einer Berührungsnaht 3730 verbunden.

Die Antiresonanzeinheiten weisen eine Wandstärke von 500 nm auf, was insbesondere einem breiten Transmissionsbereich (1. Transmissionband) um die Signalwellenlänge von 1550 nm entspricht. Es wurden zwei Designs für die Simulation der antiresonanten Hohlkernfaser 1000 genutzt. Diese zwei Designs unterscheiden sich darin, dass

- in Design 1 der erste Kreisradius FA_R 15,75 μm beträgt, und
- in Design 2 der erste Kreisradius FA_R 12,25 μm beträgt.

Der zweiten Kreisradius FI_R entspricht dabei jeweils dem ersten Kreisradius FA_R. Alle anderen Parameter waren in beiden Designs identisch. Der Tabelle 1 sind diese und weitere Parameter der simulierten antiresonanten Hohlkernfaser 1000 zu entnehmen.

Tabelle 1: Parameter der simulierten antiresonanten Hohlkernfaser 1000

| Parameter | Design 1 | Design 2 |
|---|---|---|
| erster Kreisradius FA_R | 15,75 $\mu$m | 12,25 $\mu$m |
| zweiter Kreisradius FI_R | 15,75 $\mu$m | 12,25 $\mu$m |
| Faserkernradius R_Faser | 17,25 $\mu$m | 17,25 $\mu$m |
| Anzahl Antiresonanzeinheiten | 6 | 6 |
| Wandstärken ARE-Außeneinheit, ARE-Inneneinheit und ARE-Bogeneinheit | 500 nm | 500 nm |
| Simulationsintervall des Durchmessers ARE-Bogeneinheit | 5- 22 $\mu$m | 1,5- 19 $\mu$m |
| Wandstäke an der Berührungslinie 3730 ARE-Inneneinheit und ARE-Bogeneinheit | 750 nm | 750 nm |
| Distanz Faser-Längsachse 2300 zur ersten Körperlängsachse 3110 | 33 $\mu$m | 29,5 $\mu$m |
| Sehnenlänge zwischen Verbindungslinien 3700, 3700' | 11 - 26,5 $\mu$m | 8 - 20 $\mu$m |
| Kleinster Abstand zwischen benachbarten Antiresonanzeinheiten | 1,5 $\mu$m | 5 $\mu$m |

Für die Simulation wurden folgende Moden betrachtet:

- Grundmode im Kern

  - auch als Kerngrundmoden bezeichnet;

- Moden höherer Ordnung im Kern

  - auch als Kernmoden höherer Ordnung (HOM) bezeichnet,
  - wobei in den Simulationen nur die Moden zweiter Ordnung (also die Moden erster Ordnung über der Grundmode) betrachtet wurden, da Moden der dritten und höheren Ordnung typischerweise noch höhere Wellenleiterverluste aufweisen und damit weniger relevant für die Betrachtung der Grundmodigkeit sind, welche überwiegend durch die Leistung und die Wellenleiterverluste in den Moden zweiter Ordnung bestimmt wird;

- Moden in der ARE-Außeneinheit

  - auch als Antiresonanzeinheitsmoden oder ARE-Moden bezeichnet, die innerhalb des ersten Innenraum 3170 der ARE-Außeneinheit propagieren,
  - wobei in den Simulationen nur die Grundmode in den ARE-Außeneinheiten betrachtet wurde;

- Moden in der ARE-Bogeneinheit

  - auch als Bogeneinheitsmoden oder DNE-Moden bezeichnet, die innerhalb des dritten Innenraums 3970 der ARE-Bogeneinheit propagieren,
  - wobei in den Simulationen nur die Grundmode in den ARE-Bogeneinheiten betrachtet wurden.

Im Folgenden werden die in den Figuren 8 bis 11 genutzten Parameter näher erläutert.

Der effektive Modenindex $n_{eff}$ gibt über die Relation $v_{phase}=c/n_{eff}$ die Phasengeschwindigkeit der jeweiligen Mode in Ausbreitungsrichtung entlang der Faserachse an, wobei c die Vakuumlichtgeschwindigkeit bezeichnet.

Die Differenz des effektiven Modenindex $\Delta n_{eff}$ (ARE) bezeichnet die Differenz zwischen dem effektiven Modenindex der Moden höherer Ordnung im Kern und dem effektiven Modenindex der Antiresonanzeinheitsmoden (ARE-Moden):

$$\Delta n_{eff} (ARE)= n_{eff,core\text{-}HOM} - n_{eff,ARE\ Mode}.$$

Äquivalent ergibt sich $\Delta n_{eff}$ (DNE) als die Differenz zwischen dem effektiven Modenindex der Moden höherer Ordnung im Kern und dem effektiven Modenindex der Bogeneinheitsmoden (DNE-Mode):

$$\Delta n_{eff} (DNE) = n_{eff,core\text{-}HOM} - n_{eff,DNE\,Mode}.$$

Ist die Differenz $\Delta n_{eff}$ in den beiden genannten Fällen nahe Null, propagieren die jeweiligen Moden mit etwa der gleichen Phasenausbreitungsgeschwindigkeit und können damit kohärent (phasentreu) koppeln, was zu einer effektiven Energie-Kopplung führt. In diesem Falle koppelt die Energie der Kernmode höherer Ordnung in stark verlustbehaftete ARE- oder DNE-Moden. So wandert Energie aus den Kernmoden höherer Ordnung, was zu einer Verbesserung der Grundmodigkeit führt.

In der Simulation wurde der effektive Modenindex $n_{eff}$ aus der Propagationskonstante $\beta$ der jeweiligen Mode extrahiert. Eine Mode "j" ist dabei eine Lösung des physikalischen Gleichungssystems:

$$E_j (x,y,z,t) = Amplitude_j (x,y) * \exp(i*(\beta_j*z - \omega*t)).$$

Dabei beschreibt

- $E_j (x,y,z,t)$ die elektrische Feldverteilung in den drei Raumdimensionen x,y,z zum Zeitpunkt t,
- $Amplitude_j (x,y)$ die transversale elektrische Feldverteilung.

Folglich beschreibt die Propagationskonstante $\beta$ die Phaseneigenschaften der Wellenausbreitung entlang der Faserachse z. Basierend auf der Wellenlänge des Lichtes $\lambda$ ergibt sich $n_{eff}$ für Mode "j" direkt aus $\beta$:

$$\beta_j = 2*pi/\lambda*n_{eff,j}$$

Die Propagationskonstante der j-ten Mode - $\beta_j$ - ist als Lösung der Simulation im Allgemeinen ein komplexer Parameter. Während der Realteil n_eff,j ergibt, kann man aus dem Imaginärteil die Wellenleiterverluste ableiten, welche für die Kernmoden bestimmt wurden. Der Parameter $\beta_j$ beinhaltet also alle hier wesentlichen Eigenschaften.

Die oben genannten Nachteile bekannter ARHCF werden insbesondere auch überwunden, wenn eine schnelle Grundmodigkeit erreicht wird. Damit soll zum Ausdruck kommen, dass im Kern die Moden höherer Ordnung gedämpft werden und sich die Hohlkernfaser bereits nach einer kürzeren Laufstrecke effektiv grundmodig verhält. Je kürzer diese Laufstrecke ist, desto höher die Grundmodigkeit. Physikalischer Hintergrund ist, dass die Energie der Moden höherer Ordnung im Kern in die ARE-Moden und/oder DNE-Moden koppeln, welche stärker verlustbehaftet sind. Damit leisten die Moden höherer Ordnung keinen störenden Beitrag mehr zur Lichtsignalübertragung im Kern.

Bei der Simulation der antiresonanten Hohlkernfaser 1000 hat sich überraschend gezeigt, dass die Geometrie der ARE-Bogeneinheit 3900 die Grundmodigkeit beeinflusst. Insbesondere das Verhältnis des zweifachen Radius der ARE-Bogeneinheit FB_R 3920 zum Faserkernradius R_Faser 2310 hat sich als wesentlich herausgestellt.

In **Figur 8** ist die Differenz des effektiven Modenindex $\Delta$ neff (DNE) aufgetragen über dem Verhältnis des zweifachen Radius der ARE-Bogeneinheit FB_R 3920 zum Faserkernradius R_Faser 2310. Eingezeichnet sind die

- punktartig gekennzeichneten Ergebnisse für $\Delta n_{eff}$ (DNE) basierend auf Design 1, und
- sternartig gekennzeichneten Ergebnisse für $\Delta n_{eff}$ (DNE) basierend auf Design 2. An beide Ergebnisreihen wurde jeweils mit einer Kurvenanpassung eine Kurve angepasst.

Erstrebenswert ist ein $\Delta n_{eff}$ (DNE) mit einem geringen Betrag, was für eine effektive Energie-Kopplung durch angepasste Phasenausbreitungsgeschwindigkeiten zwischen den zugehörigen Moden spricht. Die Unterschiede zwischen dem Design 1 und Design 2 führen zu keinen starken Varianten in den jeweils berechneten Ergebnissen für $\Delta n_{eff}$ (DNE). Vielmehr liegen die beiden Kurvenanpassungen sehr nahe an oder sogar übereinander. Ein kleines $\Delta n_{eff}$ (DNE) wird erreicht, wenn - insbesondere für einen ersten Kreisradius FA_R zwischen 12,25 $\mu$m und 15,75 $\mu$m - für das Verhältnis des zweifachen Radius der ARE-Bogeneinheit FB_R 3920 zum Faserkernradius R_Faser 2310 gilt:

$$\frac{2 * FB\_R}{R\_Faser} = [0{,}7; 1{,}7]$$

Zudem ermöglicht diese Ausführungsvariante durch die Vorgabe eines sinnvollen Geometrieraumes mehr Flexibilität die Kopplung der ARE-Moden und/oder DNE-Moden mit den Kernmoden höherer Ordnung optimal einzustellen.

Eine weitere positive Beeinflussung der Differenz der Phasenausbreitungs-geschwindigkeiten lässt sich erzielen, wenn für das Verhältnis des zweifachen Radius der ARE-Bogeneinheit FB_R 3920 zum Faserkernradius R_Faser 2310 gilt:

- 2*FB_R / R_Faser größer oder gleich 0,8, insbesondere größer oder gleich 0,9, insbesondere größer oder gleich 1,0; und
- 2*FB_R / R_Faser kleiner oder gleich 1,6, insbesondere kleiner oder gleich 1,5, insbesondere kleiner oder gleich 1,45.

Bei der Simulation der antiresonanten Hohlkernfaser 1000 hat sich überraschend gezeigt, dass die Geometrie der ARE-Bogeneinheit 3900 im Verhältnis zur Geometrie der ARE-Außeneinheiten die Grundmodigkeit beeinflusst. Insbesondere das Verhältnis der Faserraumhöhe FH_Z1 3800 zum Faserkernradius R_Faser 2310 ist von Bedeutung. Die

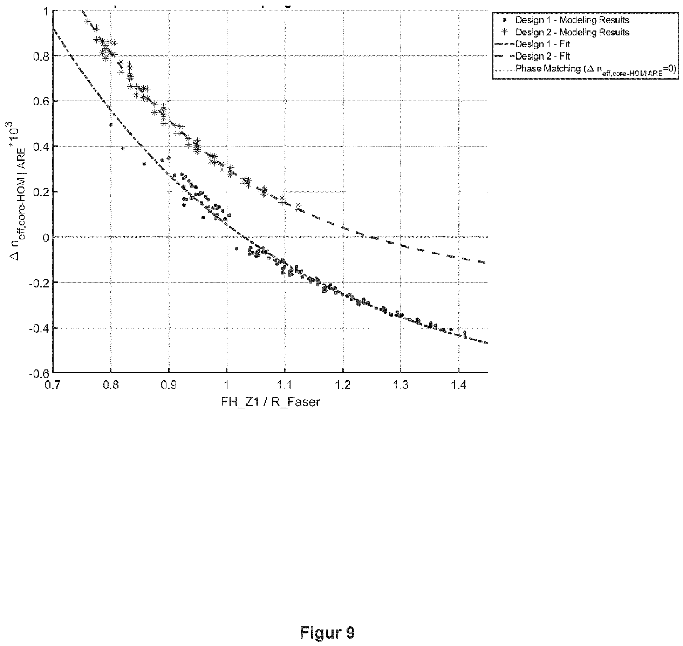

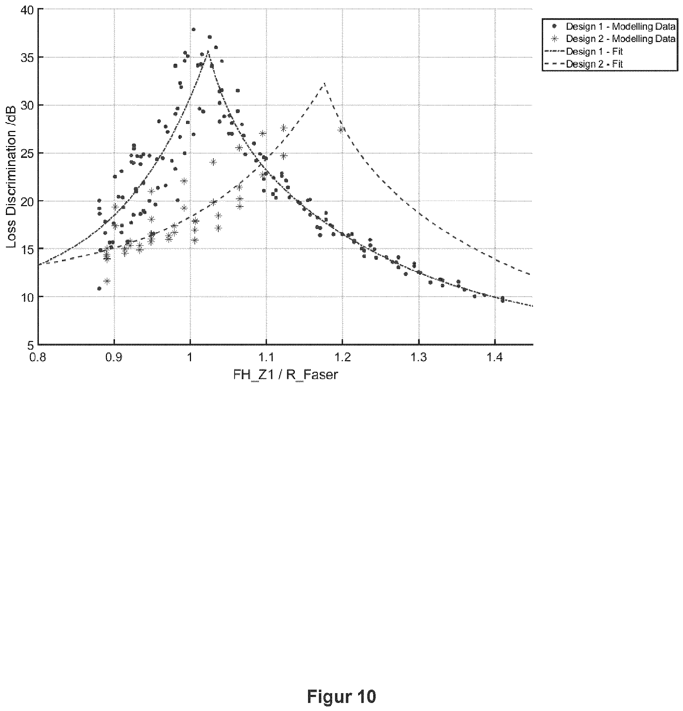

Figuren 9 und 10 verdeutlichen die positiven Eigenschaften dieses Verhältnisses.

In **Figur 9** ist für die zwei Designs der effektive Modenindex $\Delta$ neff (ARE) aufgetragen über das Verhältnis Faserraumhöhe FH_Z1 3800 zum Faserkernradius R_Faser 2310. Eingezeichnet sind die

- punktartig gekennzeichneten Ergebnisse für $\Delta n_{eff}$ (ARE) basierend auf Design 1, und

- sternartig gekennzeichneten Ergebnisse für $\Delta n_{eff}$ (ARE) basierend auf Design 2. An beide Ergebnisreihen wurde jeweils mit einer Kurvenanpassung eine Kurve angepasst.

Wie die Figur 9 zeigt, wird in Design 1 die Grundmodigkeit bei kleineren Verhältnissen von Faserraumhöhe zu Faserkernradius erreicht als bei Design 2. Insofern wird eine schnelle Grundmodigkeit bei Design 1 erreicht, wenn für das Verhältnis Faserraumhöhe FH_Z1 3800 zum Faserkernradius R_Faser 2310 gilt:

$$\frac{FH\_Z1}{R\_Faser} = [0,8; 1,3]$$

Wie die Figur 9 zeigt, wird in Design 2 die Grundmodigkeit bei größeren Verhältnissen von Faserraumhöhe zu Faserkernradius erreicht als bei Design 1. Insofern wird eine schnelle Grundmodigkeit bei Design 2 erreicht, wenn für das Verhältnis Faserraumhöhe FH_Z1 3800 zum Faserkernradius R_Faser 2310 gilt:

$$\frac{FH\_Z1}{R\_Faser} = [1,0; 1,4]$$

Kombiniert spannt insbesondere ein erster Kreisradius FA_R zwischen 12,25 $\mu$m und 15,75 $\mu$m in einer Ausführungsvariante einen Raum für das Verhältnis Faserraumhöhe FH_Z1 3800 zum Faserkernradius R_Faser 2310 auf:

$$\frac{FH\_Z1}{R\_Faser} = [0,8; 1,4]$$

Eine weitere positive Beeinflussung der Kopplung der Phasenausbreitungsgeschwindigkeit lässt sich erzielen, wenn - insbesondere für einen ersten Kreisradius FA_R zwischen 12,25 $\mu$m und 15,75 $\mu$m - für das Verhältnis Faserraumhöhe FH_Z1 zum Faserkernradius R_Faser gilt:

- FH_Z1 / R_Faser größer oder gleich 0,8, insbesondere größer oder gleich 0,85, insbesondere größer oder gleich 0,9, insbesondere größer oder gleich 0,95, insbesondere größer oder gleich 1,0 und
- FH_Z1 / R_Faser kleiner oder gleich 1,4, insbesondere kleiner oder gleich 1,35, insbesondere kleiner oder gleich 1,3, insbesondere kleiner oder gleich 1,2.

In **Figur 10** sind für die beiden Designs der Hohlkernfaser die Unterschiede in den Wellenleiterverlusten (auch als Loss Discrimination, LM oder Wellenleiterverlustunterschiede bezeichnet) zwischen der Grundmode und den Moden höherer Ordnung im Kern aufgetragen über das Verhältnis der Faserraumhöhe FH_Z1 zum Faserkernradius R_Faser.

Dabei sind die Wellenleiterverlustunterschiede wie folgt definiert:

$$LM\ (FM\ vs\ HOM) = 10*\log_{10}\ (\text{Dämpfung HOM / Dämpfung FM}).$$

In diesem Zusammenhang bezieht sich der Begriff Dämpfung ausschließlich auf die berechneten Wellenleiterverluste der jeweiligen Mode. Eingezeichnet sind die

- punktartig gekennzeichneten Ergebnisse für die Wellenleiterverlustunterschiede basierend auf Design 1, und
- sternartig gekennzeichneten Ergebnisse für die Wellenleiterverlustunterschiede basierend auf Design 2.

An beide Ergebnisreihen wurde jeweils mit einer Kurvenanpassung eine Kurve angepasst, welche die Form einer Resonanzkurve aufweist. Große Werte der Loss Discrimination deuten auf einen hohen Unterschied der Wellenleiterverluste zwischen Grundmode und Moden höherer Ordnung und sind damit für eine auf kurzer Laufstrecke erreichte Grundmodigkeit erstrebenswert.

Wie die Figur 10 verdeutlicht, erreicht eine Hohlkernfaser mit dem Design 1 den maximalen Wellenleiterverlustunterschied, wenn für das Verhältnis Faserraumhöhe FH_Z1 zum Faserkernradius R_Faser gilt:

$$\frac{FH\_Z1}{R\_Faser} = [0{,}9; 1{,}2]$$

Wie die Figur 10 weiterhin verdeutlicht, erreicht eine Hohlkernfaser mit dem Design 2 den maximalen Wellenleiterverlustunterschied, wenn für das Verhältnis Faserraumhöhe FH_Z1 zum Faserkernradius R_Faser gilt:

$$\frac{FH\_Z1}{R\_Faser} = [1{,}0; 1{,}3]$$

Kombiniert erreicht eine Hohlkernfaser, deren erster Kreisradius FA_R zwischen 12,25 $\mu$m und 15,75 $\mu$m beträgt, in einer Ausführungsvariante den maximalen Wellenleiterverlustunterschied, wenn für das Verhältnis Faserraumhöhe FH_Z1 zum Faserkernradius R_Faser gilt:

$$\frac{FH\_Z1}{R\_Faser} = [0{,}9; 1{,}3]$$

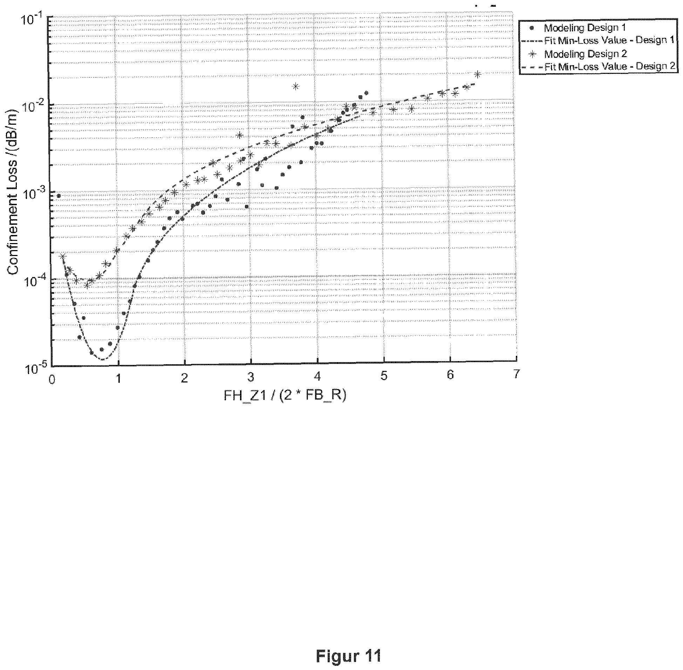

Bei der Simulation der antiresonanten Hohlkernfaser hat sich weiterhin überraschend gezeigt, dass die Geometrie der Antiresonanzeinheiten, insbesondere der ARE-Bogeneinheiten, die Dämpfung der ARHCF beeinflusst, was die Figur 11 verdeutlicht.

In **Figur 11** ist für die beiden Designs der Confinement Loss (auch als Wellenleiterverlust oder Wellenleitungsverlust bezeichnet) der Grundmode bei einer Wellenlänge von 1550 nm aufgetragen über dem Verhältnis Faserraumhöhe FH_Z1 3800 zum zweifachen Radius der ARE-Bogeneinheit FB_R 3920. Eingezeichnet sind die

- punktartig gekennzeichneten Ergebnisse für die Wellenleiterverluste basierend auf Design 1, und
- sternartig gekennzeichneten Ergebnisse für die Wellenleiterverluste basierend auf Design 2.

An beide Ergebnisreihen wurde jeweils mit einer Kurvenanpassung eine Kurve angepasst.

Wie die Figur 11 zeigt, wird eine geringe Dämpfung erreicht, die zumindest einige der oben genannten Nachteile überwindet, wenn bei Design 1 für das Verhältnis Faserraumhöhe FH_Z1 3800 zum zweifachen Radius der ARE-Bogeneinheit FB_R 3920 gilt:

$$\frac{FH\_Z1}{2*FB\_R} \leq 2{,}5$$

Eine weitere positive Beeinflussung der Dämpfung lässt sich bei Design 1 erzielen, wenn für das Verhältnis Faserraumhöhe FH_Z1 3800 zum zweifachen Radius der ARE-Bogeneinheit FB_R 3920 gilt:

$$\frac{FH\_Z1}{2 * FB\_R} = [0{,}1; 1{,}2]$$

Wie die Figur 11 zeigt, wird eine geringe Dämpfung erreicht, die zumindest einige der oben genannten Nachteile überwindet, wenn bei Design 2 für das Verhältnis Faserraumhöhe FH_Z1 3800 zum zweifachen Radius der ARE-Bogeneinheit FB_R 3920 gilt:

$$\frac{FH\_Z1}{2 * FB\_R} \leq 1{,}3$$

Eine weitere positive Beeinflussung der Dämpfung lässt sich bei Design 2 erzielen, wenn für das Verhältnis Faserraumhöhe FH_Z1 3800 zum zweifachen Radius der ARE-Bogeneinheit FB_R 3920 gilt:

$$\frac{FH\_Z1}{2 * FB\_R} = [0{,}15; 1{,}0]$$

In einer durch Figur 11 verdeutlichten Ausführungsvariante spannt ein erster Kreisradius FA_R zwischen 12,25 $\mu$m und 15,75 $\mu$m einen Raum für ein Design einer ARHCF mit einer geringen Dämpfung auf, wenn für das Verhältnis Faserraumhöhe FH_Z1 3800 zum zweifachen Radius der ARE-Bogeneinheit FB_R 3920 gilt:

$$\frac{FH\_Z1}{2 * FB\_R} = [0{,}125; 1{,}05]$$

Die in dieser Ausführungsvariante beschriebenen ARE-Bogeneinheiten sind ausschlaggebend dafür, dass

- die Grundmode im Kern nahezu nicht mit den DNE-Modenkoppelt, aber gleichzeitig
- die Moden höherer Ordnung im Kern effektiv mit den verlustbehafteteren Bogeneinheitsmoden koppeln.

Daraus resultiert eine ARHCF, welche einerseits auf einer kurzen Strecke grundmodig wird und andererseits eine nur geringe Dämpfung der Grundmode aufweist.

Eine weitere Ausführungsvariante ist dadurch gekennzeichnet, dass für das Verhältnis Faserraumhöhe FH_Z1 3800 zum zweifachen Radius der ARE-Bogeneinheit FB_R 3920 gilt:

- FH_Z1 / (2 * FB_R) kleiner oder gleich 1,2, insbesondere kleiner oder gleich 1,05, insbesondere kleiner oder gleich 1,0, insbesondere kleiner oder gleich 0,9, insbesondere kleiner oder gleich 0,85, insbesondere kleiner oder gleich 0,8; und
- FH_Z1 / (2 * FB_R) größer oder gleich 0,1, insbesondere größer oder gleich 0,125, insbesondere größer oder gleich 0,15, insbesondere größer oder gleich 0,2, insbesondere größer oder gleich 0,4, insbesondere größer oder gleich 0,5.

Diese Ausführungsvariante zeichnet sich durch eine positive Beeinflussung der Dämpfung aus.

Die antiresonante Hohlkernfaser 1000 zeichnet sich dadurch aus, dass ein Betrag der Abweichung des ersten Kreisradius FA_R 3200 vom zweiten Kreisradius FI_R 3500 kleiner als 10 % des ersten Kreisradius FA_R 3200 ist. Um die Auswirkungen dieser Unterschiede in den beiden Kreisradien auf die Grundmodigkeit zu bestimmen, wurden Simulationen für zwei weitere Designs der antiresonanten Hohlkernfaser 1000 durchgeführt. Der Tabelle 2 sind die abweichenden Parameter der simulierten antiresonanten Hohlkernfaser 1000 zu entnehmen.

Tabelle 2: Parameter der simulierten antiresonanten Hohlkernfaser 1000

| Parameter | Design 3 | Design 4 |
|---|---|---|
| erster Kreisradius FA_R | 15,75 $\mu$m | 15,75 $\mu$m |
| zweiter Kreisradius FI_R | 14,175 $\mu$m | 17,325 $\mu$m |

Alle weiteren Parameter stimmen mit den in Tabelle 1 aufgeführten und/oder oben näher beschriebenen Parameter für die antiresonanten Hohlkernfaser 1000 gemäß Design 1 überein. Folglich wurden zwei Simulationen durchgeführt, bei denen jeweils ausschließlich der zweiter Kreisradius FI_R um +/- 10% gegenüber dem erster Kreisradius FA_R geändert wurde.

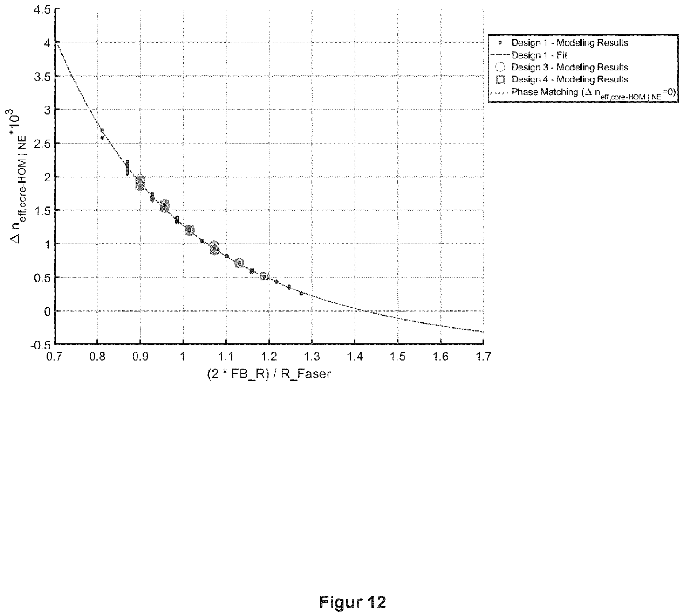

In **Figur 12** sind die Ergebnisse dieser Simulation aufgeführt. Aufgetragen ist die Differenz des effektiven Modenindex $\Delta$ neff (DNE) über dem Verhältnis des zweifachen Radius der ARE-Bogeneinheit FB_R 3920 zum Faserkernradius R_Faser 2310. Eingezeichnet sind die

- punktartig gekennzeichneten Ergebnisse für $\Delta n_{eff}$ (DNE) basierend auf Design 1, welche identisch zu jenen aus Figur 8 sind,
- kreisartig gekennzeichneten Ergebnisse für $\Delta n_{eff}$ (DNE) basierend auf Design 3, und
- rechteckig gekennzeichneten Ergebnisse für $\Delta n_{eff}$ (DNE) basierend auf Design 4.

An die Ergebnisreihe für das Design 1 wurde mit einer Kurvenanpassung eine Kurve angepasst.

Die berechneten Werte für das Design 3 und 4 liegen direkt auf jener Kurve, welche an die Werte für das Design 1 angepasst wurde. Insofern spannen der erste Kreisradius FA_R 3200 und der zweite Kreisradius FI_R 3500 innerhalb einer Abweichung, welche kleiner gleich 10 % des ersten Kreisradius FA_R 3200 ist, einen Raum für ein Design einer ARHCF mit einer geringen Dämpfung auf.

**Bezugszeichen**

| | |
|---|---|
| 1000 | antiresonante Hohlkernfaser |
| 2000 | Mantel oder Fasermantel |
| 2150 | Innenseite des Mantels |
| 2250 | Mantelinnenradius |
| 2300 | Faser-Längsachse |
| 2310 | Kernradius R_Faser |
| 2470 | hohler Kern |
| 2980 | erster Kreis |
| 2990 | zweiter Kreis |
| 3000 | Antiresonanzeinheit (ARE) |
| 3100 | ARE-Außeneinheit der antiresonanten Hohlkernfaser |
| 3110 | erste Körperlängsachse |
| 3150 | ARE-Außeneinheitswandung |
| 3170 | erste Innenraum der ARE-Außeneinheit |
| 3200 | erster Kreisradius FA_R |
| 3250 | erster Mittelpunktswinkel FA_MW |
| 3280 | erste Segmenthöhe |
| 3290 | erste Sehnenlänge |
| 3400 | ARE-Inneneinheit der antiresonanten Hohlkernfaser |
| 3410 | zweite Körperlängsachse |
| 3450 | ARE-Inneneinheitswandung |
| 3470 | zweite Innenraum der ARE- Inneneinheit |
| 3500 | zweiter Kreisradius FI_R |
| 3550 | zweiter Mittelpunktswinkel FI_MW |
| 3580 | zweite Segmenthöhe F _Innen |
| 3590 | zweite Sehnenlänge |
| 3700,3700' | Verbindungsnaht |
| 3730 | Berührungsnaht |

3800    Faserraumhöhe (FH_Z1)

3900    ARE-Bogeneinheit
3910    erste Körperlängsachse
3920    Radius FB_R der ARE-Bogeneinheit
3950    Bogenwandung
3970    dritte Innenraum der ARE-Bogeneinheit
3980    Durchmesser FB_D der ARE-Bogeneinheit

**Patentansprüche**

1.  Antiresonante Hohlkernfaser (1000), umfassend

    eine Faser-Längsachse (2300) und einen Faserkernradius R_Faser (2310),
    einen Fasermantel (2000), welcher eine Mantel-Innenbohrung (2200) aufweist,
    eine Anzahl von Antiresonanzeinheiten (3000),

        • jeweils umfassend eine ARE-Außeneinheit (3100) und eine ARE-Inneneinheit (3400),
        • wobei die kreisbogenartig ausgestaltete ARE-Außeneinheit (3100) und die kreisbogenartig ausgestaltete ARE-Inneneinheit (3400) entlang zweier Nahtlinien (3700, 3700') derart miteinander verbunden sind, dass die ARE-Inneneinheit (3400) zumindest partiell hineinragt in einen ersten Innenraum (3170) der ARE-Außeneinheit (3100),

    wobei die Antiresonanzeinheiten (3000) zueinander beabstandet und zueinander kontaktfrei an Soll-Positionen an einer Mantel-Innenseite (2150) angeordnet sind,
    wobei

        • die ARE-Außeneinheit (3100) einen ersten Kreisradius FA_R (3200) und einen ersten Mittelpunktswinkel FA_MW (3250) aufweist,
        • die ARE-Inneneinheit (3400) einen zweiten Kreisradius FI_R (3500) und einen zweiten Mittelpunktswinkel FI_MW (3550) aufweist,

    wobei ein Betrag einer Abweichung des ersten Kreisradius FA_R (3200) vom zweiten Kreisradius FI_R (3500) kleiner als 10 % des ersten Kreisradius FA_R (3200) ist,
    wobei

        • der erste Mittelpunktswinkel FA_MW (3250) kleiner 345° und größer 275° ist, und
        • der zweite Mittelpunktswinkel FI_MW (3550) kleiner 195° und größer 40° ist,

    wobei in wenigstens einer Antiresonanzeinheit (3000)

        • eine ARE-Bogeneinheit (3900) in dem ersten Innenraum (3170) angeordnet ist,
        • die ARE-Bogeneinheit (3900) kreisförmig ausgestaltet ist,
        • einen Radius FB_R (3920) aufweist, und
        • die ARE-Bogeneinheit (3900) mit der ARE-Inneneinheit (3400) entlang einer Berührungsnaht (3730) verbunden ist,

    **dadurch gekennzeichnet, dass**
    für das Verhältnis des zweifachen Radius der ARE-Bogeneinheit FB_R (3920) zum Faserkernradius R_Faser (2310) gilt

$$\frac{2 * FB\_R}{R\_Faser} = [0{,}7;\ 1{,}7]$$

2.  Antiresonante Hohlkernfaser (1000) nach Anspruch 1, **dadurch gekennzeichnet, dass** für das Verhältnis des zweifachen Radius der ARE-Bogeneinheit FB_R (3920) zum Faserkernradius R_Faser (2310) gilt:

- 2*FB_R / R_Faser größer oder gleich 0,8, insbesondere größer oder gleich 0,9, insbesondere größer oder gleich 1,0; und
- 2*FB_R / R_Faser kleiner oder gleich 1,6, insbesondere kleiner oder gleich 1,5, insbesondere kleiner oder gleich 1,45.

3.  Antiresonante Hohlkernfaser (1000) nach Anspruch 1 oder 2, **dadurch gekennzeichnet, dass** die Antiresonanzeinheit (3000) eine Faserraumhöhe FH_Z1 (3800) aufweist, und für das Verhältnis Faserraumhöhe FH_Z1 (3800) zum Faserkernradius R_Faser (2310) gilt:

$$\frac{FH\_Z1}{R\_Faser} = [0{,}8; 1{,}4]$$

4.  Antiresonante Hohlkernfaser (1000) nach Anspruch 3, **dadurch gekennzeichnet, dass** für das Verhältnis Faserraumhöhe FH_Z1 (3800) zum Faserkernradius R_Faser (2310) gilt:

- FH_Z1 / R_Faser größer oder gleich 0,8, insbesondere größer oder gleich 0,85, insbesondere größer oder gleich 0,9, insbesondere größer oder gleich 0,95, insbesondere größer oder gleich 1,0 und
- FH_Z1 / R_Faser kleiner oder gleich 1,4, insbesondere kleiner oder gleich 1,35, insbesondere kleiner oder gleich 1,3, insbesondere kleiner oder gleich 1,2.

5.  Antiresonante Hohlkernfaser (1000) nach einem der vorherigen Ansprüche, **dadurch gekennzeichnet, dass** für das Verhältnis Faserraumhöhe FH_Z1 (3800) zum zweifachen Radius der ARE-Bogeneinheit FB_R (3920) gilt:

$$\frac{FH\_Z1}{2 * FB\_R} \leq 2{,}5 \text{ , insbesondere } \leq 1{,}3$$

6.  Antiresonante Hohlkernfaser (1000) nach Anspruch 5, **dadurch gekennzeichnet, dass** für das Verhältnis Faserraumhöhe FH_Z1 (3800) zum zweifachen Radius der ARE-Bogeneinheit FB_R (3920) gilt.

- FH_Z1 / (2 * FB_R) kleiner oder gleich 1,2, insbesondere kleiner oder gleich 1,05, insbesondere kleiner oder gleich 1,0, insbesondere kleiner oder gleich 0,9, insbesondere kleiner oder gleich 0,85, insbesondere kleiner oder gleich 0,8; und
- FH_Z1 / (2 * FB_R) größer oder gleich 0,1, insbesondere größer oder gleich 0,125, insbesondere größer oder gleich 0,15, insbesondere größer oder gleich 0,2, insbesondere größer oder gleich 0,4, insbesondere größer oder gleich 0,5.

7.  Antiresonante Hohlkernfaser (1000) nach einem der vorherigen Ansprüche, **dadurch gekennzeichnet, dass** der Betrag der Abweichung des ersten Kreisradius FA_R vom zweiten Kreisradius FI_R kleiner als 5 % des ersten Kreisradius FA_R, insbesondere kleiner als 3 %, insbesondere kleiner als 2 %, insbesondere kleiner 1 % ist.

8.  Antiresonante Hohlkernfaser (1000) nach einem der vorherigen Ansprüche, **dadurch gekennzeichnet, dass** die antiresonante Hohlkernfaser (1000) drei, vier, fünf, sechs, sieben oder acht Antiresonanzeinheiten (3000) aufweist.

9.  Antiresonante Hohlkernfaser (1000) nach einem der vorherigen Ansprüche, **dadurch gekennzeichnet, dass** wenigstens eine der Antiresonanzeinheiten (3000) wenigstens eines der folgenden Merkmale aufweist:

- die ARE-Außeneinheit (3100) und/oder die ARE-Inneneinheit (3400) und/oder die ARE-Bogeneinheit (3900) einen amorphen Festkörper, insbesondere ein Glas, insbesondere Quarzglas, umfasst,
- die ARE-Außeneinheit (3100) und/oder die ARE-Inneneinheit (3400) und/oder die ARE-Bogeneinheit (3900) aus einem amorphen Festkörper, insbesondere einem Glas, insbesondere Quarzglas, besteht,
- die ARE-Außeneinheit (3100) und/oder die ARE-Inneneinheit (3400) und/oder die ARE-Bogeneinheit (3900) materialeinheitlich sind, insbesondere ein Glas mit einem Brechungsindex von mindestens 1,4, insbesondere 1,4 bis 3, insbesondere 1,4 bis 2,8 umfassen oder daraus bestehen, und
- eine Wandstärke der ARE-Außeneinheit (3100) und der ARE-Inneneinheit (3400) und der ARE-Bogeneinheit

(3900) im Wesentlichen gleich sind.

10. Antiresonante Hohlkernfaser (1000) nach einem der vorherigen Ansprüche, **dadurch gekennzeichnet, dass** die antiresonante Hohlkernfaser (1000) wenigstens eines der folgenden Merkmale aufweist:

- eine fundamentale Dämpfung von weniger als 1,0 dB/km, insbesondere von weniger als 0,5 dB/km, insbesondere von weniger als 0,25 dB/km, insbesondere weniger als 0,15 dB/km bei einer transportierten Wellenlänge zwischen 1,0 $\mu$m und 2,5 $\mu$m, und
- eine fundamentale Dämpfung von weniger als 1 dB/km bei einer transportierten Wellenlänge von bis zu 0,8 $\mu$m.

11. Antiresonante Hohlkernfaser (1000) nach einem der vorherigen Ansprüche, **dadurch gekennzeichnet, dass** für den ersten Kreisradius FA_R (3200) und/oder zweiten Kreisradius FI_R (3500) gilt:

- kleiner als 30 $\mu$m, insbesondere kleiner als 20 $\mu$m, insbesondere kleiner als 17,5 $\mu$m, insbesondere kleiner oder gleich 16,5 $\mu$m, insbesondere kleiner oder gleich 15,75 $\mu$m, und/oder
- größer als 5 $\mu$m, insbesondere größer als 10 $\mu$m, insbesondere größer oder gleich 11,5 $\mu$m, insbesondere größer oder gleich 12,25 $\mu$m.

12. Antiresonante Hohlkernfaser (1000) nach einem der vorherigen Ansprüche, **dadurch gekennzeichnet, dass** mindestens eine ARE-Bogeneinheit (3900) wenigstens eines der folgenden Merkmale aufweist:

- Radius der ARE-Bogeneinheit FB_R (3920) ist kleiner 15 $\mu$m, insbesondere kleiner 12,5 $\mu$m, insbesondere kleiner 11 $\mu$m, insbesondere keiner 9,5 $\mu$m
- Radius der ARE-Bogeneinheit FB_R (3920) ist größer 0,75 $\mu$m, insbesondere größer 1 $\mu$m, insbesondere größer 2,5$\mu$m.

13. Antiresonante Hohlkernfaser (1000) nach einem der vorherigen Ansprüche, **dadurch gekennzeichnet, dass** wenigstens eine der Antiresonanzeinheiten (3000) wenigstens eines der folgenden Merkmale aufweist:

- eine Wandstärke der ARE-Außeneinheit und/oder der ARE-Inneneinheit und/oder der ARE-Bogeneinheit beträgt zwischen 0,1 $\mu$m und 2,5 $\mu$m, insbesondere zwischen 0,15 $\mu$m und 1,5 $\mu$m, insbesondere zwischen 0,25 $\mu$m und 0,75 $\mu$m, insbesondere zwischen 0,35 $\mu$m und 0,65 $\mu$m, insbesondere 0,5 $\mu$m,
- eine Wandstärke der ARE-Außeneinheit und/oder der ARE-Inneneinheit und/oder der ARE-Bogeneinheit beträgt bei einer Signalwellenlänge von 1550 nm im ersten Transmissionsfenster zwischen 0,35 $\mu$m und 0,65 $\mu$m, insbesondere zwischen 0,4 $\mu$m und 0,6 $\mu$m, insbesondere 0,5 $\mu$m,
- eine Wandstärke der ARE-Außeneinheit und/oder der ARE-Inneneinheit und/oder der ARE-Bogeneinheit beträgt bei einer Signalwellenlänge von 1550 nm im zweiten Transmissionsfenster zwischen 0,75 $\mu$m und 1,25 $\mu$m, insbesondere zwischen 0,9 $\mu$m und 1,1 $\mu$m, insbesondere 1 $\mu$m.

Figur 1

Figur 2

3900

3920

3910

3950

3970

Figur 3

Figur 4

Figur 5

Figur 6

Figur 7

Figur 8

Figur 9

Figur 10

Figur 11

Figur 12

Europäisches
Patentamt

European
Patent Office

Office européen
des brevets

**EUROPÄISCHER RECHERCHENBERICHT**

**Nummer der Anmeldung**

**EP 23 16 4685**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | WO 2022/157179 A1 (HERAEUS QUARZGLAS [DE]) 28. Juli 2022 (2022-07-28) | 1,2,5-13 | INV. G02B6/02 |
| A | * Seite 64, Zeile 32 – Seite 65, Zeile 31; Abbildungen 17,20; Beispiel F12 * * Seite 67, Zeile 26 – Seite 69, Zeile 19 * | 3,4 | |
| | ----- | | |
| Y | JASION GREGORY T ET AL: "0.174 dB/km Hollow Core Double Nested Antiresonant Nodeless Fiber (DNANF)", 2022 OPTICAL FIBER COMMUNICATIONS CONFERENCE AND EXHIBITION (OFC), OSA, 6. März 2022 (2022-03-06), Seiten 1-3, XP034109828, * Seite 1 – Seite 2; Abbildungen 1(a)-(d) * | 1,2,5-13 | |
| | ----- | | |

**RECHERCHIERTE SACHGEBIETE (IPC)**

G02B
C03B

Der vorliegende Recherchenbericht wurde für alle Patentansprüche erstellt

| Recherchenort | Abschlußdatum der Recherche | Prüfer |
|---|---|---|
| Den Haag | 21. August 2023 | Bourhis, J |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 23 16 4685

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-08-2023

| Im Recherchenbericht angeführtes Patentdokument | Datum der Veröffentlichung | Mitglied(er) der Patentfamilie | Datum der Veröffentlichung |
|---|---|---|---|
| WO 2022157179 A1 | 28-07-2022 | EP 4030203 A1 | 20-07-2022 |
| | | WO 2022157179 A1 | 28-07-2022 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2022157179 A1